# EUROPEAN PATENT APPLICATION

(11) **EP 4 319 026 A1**
(43) Date of publication of application: **07.02.2024**
(21) Application number: 22815096.7
(22) Date of filing: 24.05.2022
(51) Int. Cl.: H04L 5/00

(54) **DOWNLINK SCHEDULING METHOD AND APPARATUS**

(30) Priority: 29.05.2021 CN 202110595951; 21.06.2021 CN 202110686797
(71) Applicant: Huawei Technologies Co., Ltd., Longgang Shenzhen, Guangdong 518129 (CN)
(72) Inventor: WANG, Bichai, Shenzhen, Guangdong 518129 (CN); LI, Xueru, Shenzhen, Guangdong 518129 (CN); KUANG, Yiru, Shenzhen, Guangdong 518129 (CN)
(74) Representative: Thun, Clemens
(86) International application number: PCT/CN2022/094712
(87) International publication number: WO 2022/253049

(57) **Abstract**

This application provides a downlink scheduling method and an apparatus. The method includes: A terminal device reports first capability information to a network device, where the first capability information indicates that values of a maximum quantity of downlink MIMO layers supported by the terminal device on a first component carrier CC include a first maximum quantity M1 of downlink MIMO layers and a second maximum quantity M2 of downlink MIMO layers; and the terminal device receives first signaling sent by the network device, where the first signaling configures maximum MIMO layer quantity information corresponding to the first CC, and the maximum MIMO layer quantity information includes a first maximum quantity N1 of MIMO layers and a second maximum quantity N2 of MIMO layers. The first maximum quantity N1 of MIMO layers is not greater than the first maximum quantity M1 of downlink MIMO layers, and the second maximum quantity N2 of MIMO layers is not greater than the second maximum quantity M2 of downlink MIMO layers. According to the method, the network device can directly switch or dynamically adjust, after activating or deactivating one or more carriers by using a MAC CE, a maximum quantity of MIMO layers on an activated CC without reconfiguring a PDSCH parameter by using RRC signaling. This can avoid a delay and overheads caused by RRC-based reconfiguration.

## Description

This application claims priority to Chinese Patent Application No. 202110595951.8, filed with the China National Intellectual Property Administration on May 29, 2021 and entitled "METHOD FOR INCREASING QUANTITY OF DOWNLINK TRANSMISSION STREAMS", and claims priority to Chinese Patent Application No. 202110686797.5, filed with the China National Intellectual Property Administration on June 21, 2021 and entitled "DOWNLINK SCHEDULING METHOD AND APPARATUS", which are incorporated herein by reference in their entireties.

### TECHNICAL FIELD

This application relates to the field of communications technologies, and in particular, to a downlink scheduling method and an apparatus.

### BACKGROUND

With the diversified development of services of the mobile internet, the internet of things, and the like, a system capacity required by a mobile communications system keeps increasing. For example, services such as ultra-high-definition video transmission, virtual reality (virtual reality, VR), and augmented reality (augmented reality, AR) require a high downlink (downlink, DL) capacity. To meet a requirement of diversified service development, a downlink capacity needs to be further increased.

Currently, a commercial terminal usually can support a plurality of frequency bands (for example, 1.8 GHz, 2.1 GHz, 2.6 GHz, 3.5 GHz, and 4.9 GHz), and a radio frequency link and an antenna are deployed for each frequency band. On the whole, quantities of radio frequency links and antennas are large. For example, usually, a commercial terminal such as a high-end smartphone or customer premises equipment (customer premises equipment, CPE) may be provided with more than 10 receive antenna ports. Coordinated transmission of a plurality of frequency band can be implemented by using a downlink carrier aggregation (carrier aggregation, CA) technology, thereby increasing a downlink throughput to a specific extent. However, a quantity of downlink multiple-input multiple-output (multiple-input multiple-output, MIMO) transmission layers of a single frequency band of a terminal is limited by a quantity of receive antenna ports of the frequency band. Currently, a single frequency band of a commercial terminal usually can support only two or four receive antenna ports, and large quantities of radio frequency links and antennas configured for the terminal cannot be fully utilized. To further increase a downlink throughput, a mobile communications system may use a terminal radio frequency/antenna pooling solution, so that a radio frequency link and an antenna of a terminal device can switch between different frequency bands, thereby flexibly adjusting a maximum quantity of downlink transmission layers that can be supported by each frequency band, without adding any additional radio frequency link/antenna. Usually, when reporting a capability by using radio resource control (radio resource control, RRC) signaling, a terminal device reports a plurality of carrier combinations and a capability of a maximum quantity of downlink transmission layers that is supported by the terminal device on each carrier in each carrier combination. Based on the capability reported by the terminal, a base station configures downlink data transmission parameters for the terminal by using RRC signaling, where the downlink data transmission parameters include a downlink data transmission carrier combination and a maximum quantity of downlink transmission layers corresponding to each carrier. Then, the base station schedules downlink data transmission based on the configured parameters.

In a current carrier aggregation mechanism, after a base station activates or deactivates one or more frequency bands, to change a maximum quantity of downlink transmission layers, the base station needs to reconfigure downlink data transmission parameters by using radio resource control (radio resource control, RRC) signaling. As a result, a reconfiguration delay is large, and data transmission during reconfiguration is impaired.

### SUMMARY

This application provides a downlink scheduling method and an apparatus, to resolve a problem in a conventional technology that a delay and overheads are large due to reconfiguration of downlink data transmission parameters.

According to a first aspect, this application provides a downlink scheduling method. The method may include: A terminal device reports first capability information to a network device, where the first capability information indicates that values of a maximum quantity of downlink MIMO layers supported by the terminal device on a first component carrier CC include a first maximum quantity M1 of downlink MIMO layers and a second maximum quantity M2 of downlink MIMO layers; and the terminal device receives first signaling sent by the network device, where the first signaling configures maximum MIMO layer quantity information corresponding to the first CC, and the maximum MIMO layer quantity information includes a first maximum quantity N1 of MIMO layers and a second maximum quantity N2 of MIMO layers. The first maximum quantity N1 of MIMO layers is not greater than the first maximum quantity M1 of downlink MIMO layers, and the second maximum quantity N2 of MIMO layers is not greater than the second maximum quantity M2 of downlink MIMO layers.

According to the method, PDSCH configuration and a terminal capability can be enhanced, so that the network device can directly switch or dynamically adjust, after activating or deactivating one or more carriers by using a MAC CE, a maximum quantity of MIMO layers on an activated CC without reconfiguring a PDSCH parameter by using RRC signaling. This can avoid a delay and overheads caused by RRC-based reconfiguration.

In a possible design, the first signaling is radio resource control RRC signaling, and the first maximum quantity M1 of downlink MIMO layers is different from the second maximum quantity M2 of downlink MIMO layers.

In a possible design, the first capability information further indicates a plurality of carrier combinations supported by the terminal device, the plurality of carrier combinations include a first carrier combination, and the first carrier combination includes the first CC and a second CC.

In a possible design, after the second CC of the terminal device is deactivated, the terminal device receives a physical downlink shared channel PDSCH on the first CC based on a third quantity of MIMO layers by using a second carrier combination, where the third quantity of MIMO layers is not greater than the second maximum quantity N2 of MIMO layers. The plurality of carrier combinations include the second carrier combination, and the second carrier combination does not include the second CC. In other words, after the second CC of the terminal device is deactivated, the network device and the terminal device may freely switch a maximum quantity of MIMO layers for use, and the network device does not need to perform RRC-based reconfiguration on the terminal device.

In a possible design, before the second CC of the terminal device is deactivated, the terminal device receives a PDSCH on the first CC based on a fourth quantity of MIMO layers by using the first carrier combination, where the fourth quantity of MIMO layers is not greater than the first maximum quantity N1 of MIMO layers. In other words, a quantity of MIMO layers actually used by the terminal device may be less than a maximum quantity of MIMO layers that is configured by the network device.

In a possible design, the terminal device receives first indication information sent by the network device, where the first indication information indicates the second maximum quantity N2 of MIMO layers that corresponds to the first CC after the second CC is deactivated. In this way, the network device can dynamically indicate a maximum quantity of MIMO layers that corresponds to each activated CC.

In a possible design, after the second CC of the terminal device is deactivated, the terminal device sends second indication information to the network device, where the second indication information indicates that the maximum quantity of downlink MIMO layers supported by the terminal device on the first CC is the second maximum quantity M2 of downlink MIMO layers; and the terminal device receives first indication information sent by the network device, where the first indication information indicates the second maximum quantity N2 of MIMO layers that corresponds to the first CC. In this way, the terminal device can dynamically report a maximum quantity of downlink MIMO layers supported on each CC, and the network device can dynamically indicate, based on the maximum quantity of downlink MIMO layers that is supported on each CC and that is reported by the terminal device, a maximum quantity of MIMO layers that corresponds to the activated CC.

In a possible design, the second indication information is carried in uplink control information UCI.

In a possible design, the first indication information is carried in a media access control layer element MAC CE or downlink control information DCI.

In a possible design, before the second CC of the terminal device is deactivated, the maximum quantity of downlink MIMO layers supported by the terminal device on the first CC is the first maximum quantity M1 of downlink MIMO layers; and after the second CC of the terminal device is deactivated, the maximum quantity of downlink MIMO layers supported by the terminal device on the first CC is the second maximum quantity M2 of downlink MIMO layers, where the second maximum quantity M2 of downlink MIMO layers is not less than the first maximum quantity M1 of downlink MIMO layers. In this way, the terminal device can make full use of a receive antenna port, thereby increasing a data throughput.

In a possible design, after the second CC of the terminal device is deactivated, the terminal device skip receiving a radio resource control RRC-based PDSCH reconfiguration message. Therefore, a delay and overheads caused by RRC-based reconfiguration can be avoided.

In a possible design, deactivating the second CC of the terminal device includes: the terminal device receives a MAC CE sent by the network device, where the MAC CE indicates to deactivate the second CC of the terminal device.

In a possible design, the terminal device further reports second capability information, where the second capability information indicates that the terminal device supports dynamically switching the maximum quantity of downlink MIMO layers that corresponds to the first CC. In other words, the second capability information indicates that the terminal device can switch, without RRC-based reconfiguration, the maximum quantity of downlink MIMO layers that corresponds to the first CC.

According to a second aspect, this application provides a downlink scheduling method. The method may include: A terminal device reports first capability information to a network device, where the first capability information indicates that values of a maximum quantity of downlink MIMO layers supported by the terminal device on a first component carrier CC include a first maximum quantity M1 of downlink MIMO layers and a second maximum quantity M2 of downlink MIMO layers; the terminal device receives radio resource control RRC signaling sent by the network device, where the RRC signaling configures a first maximum quantity N1 of MIMO layers that corresponds to the first CC, and the first maximum quantity N1 of MIMO layers is not greater than the first maximum quantity M1 of downlink MIMO layers; and the terminal device receives first indication information sent by the network device, where the first indication information indicates a second maximum quantity N2 of MIMO layers that corresponds to the first CC after a second CC is deactivated, and the second maximum quantity N2 of MIMO layers is not greater than the second maximum quantity M2 of downlink MIMO layers. The first CC and the second CC are in a first carrier combination.

According to the method, after the network device activates or deactivates one or more carriers by using a MAC CE, the network device can dynamically indicate, without reconfiguring a PDSCH parameter by using RRC signaling, a maximum quantity of MIMO layers that corresponds to each activated CC. This can avoid a delay and overheads caused by RRC-based reconfiguration.

In a possible design, the first maximum quantity M1 of downlink MIMO layers is different from the second maximum quantity M2 of downlink MIMO layers.

In a possible design, the first capability information further indicates a plurality of carrier combinations supported by the terminal device, the plurality of carrier combinations include the first carrier combination, and the first carrier combination includes the first CC and the second CC.

In a possible design, after the second CC of the terminal device is deactivated, the terminal device receives a physical downlink shared channel PDSCH on the first CC based on a third quantity of MIMO layers by using a second carrier combination, where the third quantity of MIMO layers is not greater than the second maximum quantity N2 of MIMO layers. The plurality of carrier combinations include the second carrier combination, and the second carrier combination does not include the second CC. In other words, a quantity of MIMO layers actually used by the terminal device may be less than a maximum quantity of MIMO layers that is configured by the network device.

In a possible design, before the second CC of the terminal device is deactivated, the terminal device receives a PDSCH on the first CC based on a fourth quantity of MIMO layers by using the first carrier combination, where the fourth quantity of MIMO layers is not greater than the first maximum quantity N1 of MIMO layers. In other words, a quantity of MIMO layers actually used by the terminal device may be less than a maximum quantity of MIMO layers that is configured by the network device.

In a possible design, the first indication information is carried in a media access control layer element MAC CE or downlink control information DCI.

In a possible design, before the second CC of the terminal device is deactivated, the maximum quantity of downlink MIMO layers supported by the terminal device on the first CC is the first maximum quantity M1 of downlink MIMO layers; and after the second CC of the terminal device is deactivated, the maximum quantity of downlink MIMO layers supported by the terminal device on the first CC is the second maximum quantity M2 of downlink MIMO layers, where the second maximum quantity M2 of downlink MIMO layers is not less than the first maximum quantity M1 of downlink MIMO layers. In this way, the terminal device can make full use of a receive antenna port, thereby increasing a data throughput.

In a possible design, after the second CC of the terminal device is deactivated, the terminal device skip receiving a radio resource control RRC-based PDSCH reconfiguration message. Therefore, a delay and overheads caused by RRC-based reconfiguration can be avoided.

In a possible design, deactivating the second CC of the terminal device includes: the terminal device receives a MAC CE sent by the network device, where the MAC CE indicates to deactivate the second CC of the terminal device.

In a possible design, the terminal device further reports second capability information, where the second capability information indicates that the terminal device supports dynamically switching the maximum quantity of downlink MIMO layers that corresponds to the first CC. In other words, the second capability information indicates that the terminal device can switch, without RRC-based reconfiguration, the maximum quantity of downlink MIMO layers that corresponds to the first CC.

According to a third aspect, this application provides a downlink scheduling method. The method may include: A terminal device reports first capability information to a network device, where the first capability information indicates that values of a maximum quantity of downlink MIMO layers supported by the terminal device on a first component carrier CC include a first maximum quantity M1 of downlink MIMO layers and a second maximum quantity M2 of downlink MIMO layers; the terminal device receives radio resource control RRC signaling sent by the network device, where the RRC signaling configures a first maximum quantity N1 of MIMO layers that corresponds to the first CC, and the first maximum quantity N1 of MIMO layers is not greater than the first maximum quantity M1 of downlink MIMO layers; after a second CC of the terminal device is deactivated, the terminal device sends second indication information to the network device, where the second indication information indicates that the maximum quantity of downlink MIMO layers supported by the terminal device on the first CC is the second maximum quantity M2 of downlink MIMO layers; and the terminal device receives first indication information sent by the network device, where the first indication information indicates a second maximum quantity N2 of MIMO layers that corresponds to the first CC, and the second maximum quantity N2 of MIMO layers is not greater than the second maximum quantity M2 of downlink MIMO layers. The first CC and the second CC are in a first carrier combination.

According to the method, after the network device activates or deactivates one or more carriers by using a MAC CE, the terminal device can dynamically report a maximum quantity of downlink MIMO layers supported on each CC; and the network device can dynamically indicate, based on the maximum quantity of downlink MIMO layers that is supported on each CC and that is reported by the terminal device, a maximum quantity of MIMO layers that corresponds to the activated CC, without reconfiguring a PDSCH parameter by using RRC signaling. This can avoid a delay and overheads caused by RRC-based reconfiguration.

In a possible design, the first maximum quantity M1 of downlink MIMO layers is different from the second maximum quantity M2 of downlink MIMO layers.

In a possible design, the first capability information further indicates a plurality of carrier combinations supported by the terminal device, the plurality of carrier combinations include the first carrier combination, and the first carrier combination includes the first CC and the second CC.

In a possible design, after the second CC of the terminal device is deactivated, the terminal device receives a physical downlink shared channel PDSCH on the first CC based on a third quantity of MIMO layers by using a second carrier combination, where the third quantity of MIMO layers is not greater than the second maximum quantity N2 of MIMO layers. The plurality of carrier combinations include the second carrier combination, and the second carrier combination does not include the second CC. In other words, a quantity of MIMO layers actually used by the terminal device may be less than a maximum quantity of MIMO layers that is configured by the network device.

In a possible design, before the second CC of the terminal device is deactivated, the terminal device receives a PDSCH on the first CC based on a fourth quantity of MIMO layers by using the first carrier combination, where the fourth quantity of MIMO layers is not greater than the first maximum quantity N1 of MIMO layers. In other words, a quantity of MIMO layers actually used by the terminal device may be less than a maximum quantity of MIMO layers that is configured by the network device.

In a possible design, the second indication information is carried in uplink control information UCI.

In a possible design, the first indication information is carried in a media access control layer element MAC CE or downlink control information DCI.

In a possible design, before the second CC of the terminal device is deactivated, the maximum quantity of downlink MIMO layers supported by the terminal device on the first CC is the first maximum quantity M1 of downlink MIMO layers; and after the second CC of the terminal device is deactivated, the maximum quantity of downlink MIMO layers supported by the terminal device on the first CC is the second maximum quantity M2 of downlink MIMO layers, where the second maximum quantity M2 of downlink MIMO layers is not less than the first maximum quantity M1 of downlink MIMO layers. In this way, the terminal device can make full use of a receive antenna port, thereby increasing a data throughput.

In a possible design, after the second CC of the terminal device is deactivated, the terminal device skip receiving a radio resource control RRC-based PDSCH reconfiguration message. Therefore, a delay and overheads caused by RRC-based reconfiguration can be avoided.

In a possible design, deactivating the second CC of the terminal device includes: the terminal device receives a MAC CE sent by the network device, where the MAC CE indicates to deactivate the second CC of the terminal device.

In a possible design, the terminal device further reports second capability information, where the second capability information indicates that the terminal device supports dynamically switching the maximum quantity of downlink MIMO layers that corresponds to the first CC. In other words, the second capability information indicates that the terminal device can switch, without RRC-based reconfiguration, the maximum quantity of downlink MIMO layers that corresponds to the first CC.

According to a fourth aspect, this application provides a downlink scheduling method. The method may include:

A network device receives first capability information reported by a terminal device, where the first capability information indicates that values of a maximum quantity of downlink MIMO layers supported by the terminal device on a first component carrier CC include a first maximum quantity M1 of downlink MIMO layers and a second maximum quantity M2 of downlink MIMO layers; and the network device sends first signaling to the terminal device, where the first signaling configures a maximum MIMO layer quantity list corresponding to the first CC, and the maximum MIMO layer quantity list includes a first maximum quantity N1 of MIMO layers and a second maximum quantity N2 of MIMO layers. The first maximum quantity N1 of MIMO layers is not greater than the first maximum quantity M1 of downlink MIMO layers, and the second maximum quantity N2 of MIMO layers is not greater than the second maximum quantity M2 of downlink MIMO layers.

According to the method, PDSCH configuration and a terminal capability can be enhanced, so that the network device can directly switch or dynamically adjust, after activating or deactivating one or more carriers by using a MAC CE, a maximum quantity of MIMO layers on an activated CC without reconfiguring a PDSCH parameter by using RRC signaling. This can avoid a delay and overheads caused by RRC-based reconfiguration.

In a possible design, the first signaling is radio resource control RRC signaling, and the first maximum quantity M1 of downlink MIMO layers is different from the second maximum quantity M2 of downlink MIMO layers.

In a possible design, the first capability information further indicates a plurality of carrier combinations supported by the terminal device, the plurality of carrier combinations include a first carrier combination, and the first carrier combination includes the first CC and a second CC.

In a possible design, the network device sends deactivation indication information to the terminal device, so that the second CC of the terminal device is deactivated, and then the network device sends a physical downlink shared channel PDSCH on the first CC based on a third quantity of MIMO layers by using a second carrier combination, where the third quantity of MIMO layers is not greater than the second maximum quantity N2 of MIMO layers. The plurality of carrier combinations include the second carrier combination, and the second carrier combination does not include the second CC. In other words, after the second CC of the terminal device is deactivated, the network device and the terminal device may freely switch a maximum quantity of MIMO layers for use, and the network device does not need to perform RRC-based reconfiguration on the terminal device.

In a possible design, before the second CC of the terminal device is deactivated, the network device sends a PDSCH on the first CC based on a fourth quantity of MIMO layers by using the first carrier combination, where the fourth quantity of MIMO layers is not greater than the first maximum quantity N1 of MIMO layers. In other words, a quantity of MIMO layers actually used by the terminal device may be less than a maximum quantity of MIMO layers that is configured by the network device.

In a possible design, the network device sends first indication information to the terminal device, where the first indication information indicates the second maximum quantity N2 of MIMO layers that corresponds to the first CC after the second CC is deactivated. In this way, the network device can dynamically indicate a maximum quantity of MIMO layers that corresponds to each activated CC.

In a possible design, after the network device sends the deactivation indication information to the terminal device, so that the terminal device deactivates the second CC, the network device receives second indication information sent by the terminal device, where the second indication information indicates that the maximum quantity of downlink MIMO layers supported by the terminal device on the first CC is the second maximum quantity M2 of downlink MIMO layers; and the network device sends first indication information to the terminal device, where the first indication information indicates the second maximum quantity N2 of MIMO layers that corresponds to the first CC. In this way, the terminal device can dynamically report a maximum quantity of downlink MIMO layers supported on each CC, and the network device can dynamically indicate, based on the maximum quantity of downlink MIMO layers that is supported on each CC and that is reported by the terminal device, a maximum quantity of MIMO layers that corresponds to the activated CC.

In a possible design, the second indication information is carried in uplink control information UCI.

In a possible design, the first indication information is carried in a media access control layer element MAC CE or downlink control information DCI.

In a possible design, before the second CC of the terminal device is deactivated, the maximum quantity of downlink MIMO layers supported by the terminal device on the first CC is the first maximum quantity M1 of downlink MIMO layers; and after the network device sends the deactivation indication information to the terminal device, so that the terminal device deactivates the second CC, the maximum quantity of downlink MIMO layers supported by the terminal device on the first CC is the second maximum quantity M2 of downlink MIMO layers, where the second maximum quantity M2 of downlink MIMO layers is not less than the first maximum quantity M1 of downlink MIMO layers. In this way, the terminal device can make full use of a receive antenna port, thereby increasing a data throughput.

In a possible design, after the network device sends the deactivation indication information to the terminal device, so that the terminal device deactivates the second CC, the network device skip sending a radio resource control RRC-based PDSCH reconfiguration message. Therefore, a delay and overheads caused by RRC-based reconfiguration can be avoided.

In a possible design, that the network device sends deactivation indication information to the terminal device, so that the terminal device deactivates the second CC includes: the network device sends a MAC CE to the terminal device, where the MAC CE indicates the terminal device to deactivate the second CC.

In a possible design, the network device further receives second capability information reported by the terminal device, where the second capability information indicates that the terminal device supports dynamically switching the maximum quantity of downlink MIMO layers that corresponds to the first CC. In other words, the second capability information indicates that the terminal device can switch, without RRC-based reconfiguration, the maximum quantity of downlink MIMO layers that corresponds to the first CC.

According to a fifth aspect, this application provides a downlink scheduling method. The method may include: A network device receives first capability information reported by a terminal device, where the first capability information indicates that values of a maximum quantity of downlink MIMO layers supported by the terminal device on a first component carrier CC include a first maximum quantity M1 of downlink MIMO layers and a second maximum quantity M2 of downlink MIMO layers; the network device sends radio resource control RRC signaling to the terminal device, where the RRC signaling configures a first maximum quantity N1 of MIMO layers that corresponds to the first CC, and the first maximum quantity N1 of MIMO layers is not greater than the first maximum quantity M1 of downlink MIMO layers; and the network device sends first indication information to the terminal device, where the first indication information indicates a second maximum quantity N2 of MIMO layers that corresponds to the first CC after a second CC is deactivated, and the second maximum quantity N2 of MIMO layers is not greater than the second maximum quantity M2 of downlink MIMO layers. The first CC and the second CC are in a first carrier combination.

According to the method, after the network device activates or deactivates one or more carriers by using a MAC CE, the network device can dynamically indicate, without reconfiguring a PDSCH parameter by using RRC signaling, a maximum quantity of MIMO layers that corresponds to each activated CC. This can avoid a delay and overheads caused by RRC-based reconfiguration.

In a possible design, the first maximum quantity M1 of downlink MIMO layers is different from the second maximum quantity M2 of downlink MIMO layers.

In a possible design, the first capability information further indicates a plurality of carrier combinations supported by the terminal device, the plurality of carrier combinations include the first carrier combination, and the first carrier combination includes the first CC and the second CC.

In a possible design, the network device sends deactivation indication information to the terminal device, so that the second CC of the terminal device is deactivated, and then the network device sends a physical downlink shared channel PDSCH on the first CC based on a third quantity of MIMO layers by using a second carrier combination, where the third quantity of MIMO layers is not greater than the second maximum quantity N2 of MIMO layers. The plurality of carrier combinations include the second carrier combination, and the second carrier combination does not include the second CC. In other words, a quantity of MIMO layers actually used by the terminal device may be less than a maximum quantity of MIMO layers that is configured by the network device.

In a possible design, before the second CC of the terminal device is deactivated, the network device sends a PDSCH on the first CC based on a fourth quantity of MIMO layers by using the first carrier combination, where the fourth quantity of MIMO layers is not greater than the first maximum quantity N1 of MIMO layers. In other words, a quantity of MIMO layers actually used by the terminal device may be less than a maximum quantity of MIMO layers that is configured by the network device.

In a possible design, the first indication information is carried in a media access control layer element MAC CE or downlink control information DCI.

In a possible design, before the second CC of the terminal device is deactivated, the maximum quantity of downlink MIMO layers supported by the terminal device on the first CC is the first maximum quantity M1 of downlink MIMO layers; and after the network device sends the deactivation indication information to the terminal device, so that the terminal device deactivates the second CC, the maximum quantity of downlink MIMO layers supported by the terminal device on the first CC is the second maximum quantity M2 of downlink MIMO layers, where the second maximum quantity M2 of downlink MIMO layers is not less than the first maximum quantity M1 of downlink MIMO layers. In this way, the terminal device can make full use of a receive antenna port, thereby increasing a data throughput.

In a possible design, after the network device sends the deactivation indication information to the terminal device, so that the terminal device deactivates the second CC, the network device skip sending a radio resource control RRC-based PDSCH reconfiguration message. Therefore, a delay and overheads caused by RRC-based reconfiguration can be avoided.

In a possible design, that the network device sends deactivation indication information to the terminal device, so that the terminal device deactivates the second CC includes: the network device sends a MAC CE to the terminal device, where the MAC CE indicates the terminal device to deactivate the second CC.

In a possible design, the network device further receives second capability information reported by the terminal device, where the second capability information indicates that the terminal device supports dynamically switching the maximum quantity of downlink MIMO layers that corresponds to the first CC. In other words, the second capability information indicates that the terminal device can switch, without RRC-based reconfiguration, the maximum quantity of downlink MIMO layers that corresponds to the first CC.

According to a sixth aspect, this application provides a downlink scheduling method. The method may include: A network device receives first capability information reported by a terminal device, where the first capability information indicates that values of a maximum quantity of downlink MIMO layers supported by the terminal device on a first component carrier CC include a first maximum quantity M1 of downlink MIMO layers and a second maximum quantity M2 of downlink MIMO layers; the network device sends radio resource control RRC signaling to the terminal device, where the RRC signaling configures a first maximum quantity N1 of MIMO layers that corresponds to the first CC, and the first maximum quantity N1 of MIMO layers is not greater than the first maximum quantity M1 of downlink MIMO layers; the network device sends deactivation indication information to the terminal device, so that the terminal device deactivates a second CC, and then the network device receives second indication information sent by the terminal device, where the second indication information indicates that the maximum quantity of downlink MIMO layers supported by the terminal device on the first CC is the second maximum quantity M2 of downlink MIMO layers, and the first CC and the second CC are in a first carrier combination; and the network device sends first indication information to the terminal device, where the first indication information indicates a second maximum quantity N2 of MIMO layers that corresponds to the first CC, and the second maximum quantity N2 of MIMO layers is not greater than the second maximum quantity M2 of downlink MIMO layers.

According to the method, after the network device activates or deactivates one or more carriers by using a MAC CE, the terminal device can dynamically report a maximum quantity of downlink MIMO layers supported on each CC; and the network device can dynamically indicate, based on the maximum quantity of downlink MIMO layers that is supported on each CC and that is reported by the terminal device, a maximum quantity of MIMO layers that corresponds to the activated CC, without reconfiguring a PDSCH parameter by using RRC signaling. This can avoid a delay and overheads caused by RRC-based reconfiguration.

In a possible design, the first maximum quantity M1 of downlink MIMO layers is different from the second maximum quantity M2 of downlink MIMO layers.

In a possible design, the first capability information further indicates a plurality of carrier combinations supported by the terminal device, the plurality of carrier combinations include the first carrier combination, and the first carrier combination includes the first CC and the second CC.

In a possible design, after the network device sends the deactivation indication information to the terminal device, so that the second CC of the terminal device is deactivated, the network device sends a physical downlink shared channel PDSCH on the first CC based on a third quantity of MIMO layers by using a second carrier combination, where the third quantity of MIMO layers is not greater than the second maximum quantity N2 of MIMO layers. The plurality of carrier combinations include the second carrier combination, and the second carrier combination does not include the second CC. In other words, a quantity of MIMO layers actually used by the terminal device may be less than a maximum quantity of MIMO layers that is configured by the network device.

In a possible design, before the second CC of the terminal device is deactivated, the network device sends a PDSCH on the first CC based on a fourth quantity of MIMO layers by using the first carrier combination, where the fourth quantity of MIMO layers is not greater than the first maximum quantity N1 of MIMO layers. In other words, a quantity of MIMO layers actually used by the terminal device may be less than a maximum quantity of MIMO layers that is configured by the network device.

In a possible design, the second indication information is carried in uplink control information UCI.

In a possible design, the first indication information is carried in a media access control layer element MAC CE or downlink control information DCI.

In a possible design, before the second CC of the terminal device is deactivated, the maximum quantity of downlink MIMO layers supported by the terminal device on the first CC is the first maximum quantity M1 of downlink MIMO layers; and after the network device sends the deactivation indication information to the terminal device, so that the terminal device deactivates the second CC, the maximum quantity of downlink MIMO layers supported by the terminal device on the first CC is the second maximum quantity M2 of downlink MIMO layers, where the second maximum quantity M2 of downlink MIMO layers is not less than the first maximum quantity M1 of downlink MIMO layers. In this way, the terminal device can make full use of a receive antenna port, thereby increasing a data throughput.

In a possible design, after the network device sends the deactivation indication information to the terminal device, so that the terminal device deactivates the second CC, the network device skip sending a radio resource control RRC-based PDSCH reconfiguration message. Therefore, a delay and overheads caused by RRC-based reconfiguration can be avoided.

In a possible design, that the network device sends deactivation indication information to the terminal device, so that the terminal device deactivates the second CC includes: the network device sends a MAC CE to the terminal device, where the MAC CE indicates the terminal device to deactivate the second CC.

In a possible design, the network device further receives second capability information reported by the terminal device, where the second capability information indicates that the terminal device supports dynamically switching the maximum quantity of downlink MIMO layers that corresponds to the first CC. In other words, the second capability information indicates that the terminal device can switch, without RRC-based reconfiguration, the maximum quantity of downlink MIMO layers that corresponds to the first CC.

According to a seventh aspect, this application further provides a communications apparatus. The communications apparatus may be a terminal device, and the communications apparatus has a function of implementing the terminal device according to any one of the first aspect, the second aspect, or the third aspect. The function may be implemented by hardware, or may be implemented by executing corresponding software by hardware. The hardware or software includes one or more modules corresponding to the foregoing function.

In a possible design, a structure of the communications apparatus includes a transceiver unit and a processing unit. These units may perform corresponding functions of the terminal device according to any one of the first aspect, the second aspect, or the third aspect. For details, refer to detailed descriptions in the method examples. Details are not described herein again.

In a possible design, a structure of the communications apparatus includes a transceiver and a processor, and optionally, further includes a memory. The transceiver is configured to receive and send data, and is configured to communicate and interact with another device in a communications system. The processor is configured to support the communications apparatus in performing corresponding functions of the terminal device according to any one of the first aspect, the second aspect, or the third aspect. The memory is coupled to the processor, and stores program instructions and data that are necessary for the communications apparatus.

According to an eighth aspect, this application further provides a communications apparatus. The communications apparatus may be a network device, and the communications apparatus has a function of implementing the network device according to any one of the fourth aspect, the fifth aspect, or the sixth aspect. The function may be implemented by hardware, or may be implemented by executing corresponding software by hardware. The hardware or software includes one or more modules corresponding to the foregoing function.

In a possible design, a structure of the communications apparatus includes a transceiver unit and a processing unit. These units may perform corresponding functions of the network device according to any one of the fourth aspect, the fifth aspect, or the sixth aspect. For details, refer to detailed descriptions in the method examples. Details are not described herein again.

In a possible design, a structure of the communications apparatus includes a transceiver and a processor, and optionally, further includes a memory. The transceiver is configured to receive and send data, and is configured to communicate and interact with another device in a communications system. The processor is configured to support the communications apparatus in performing corresponding functions of the network device according to any one of the fourth aspect, the fifth aspect, or the sixth aspect. The memory is coupled to the processor, and stores program instructions and data that are necessary for the communications apparatus.

According to a ninth aspect, an embodiment of this application provides a communications system. The communications system may include the terminal device and the network device that are mentioned above.

According to a tenth aspect, an embodiment of this application provides a computer-readable storage medium. The computer-readable storage medium stores program instructions. When the program instructions are run on a computer, the computer is enabled to perform the method according to any one of the first aspect to the sixth aspect or the possible designs thereof. For example, the computer-readable storage medium may be any usable medium accessible to a computer. By way of example and without any limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be used for carrying or storing expected program code in a form of an instruction or a data structure and that can be accessed by a computer.

According to an eleventh aspect, an embodiment of this application provides a computer program product including computer program code or instructions. When the computer program product is run on a computer, the computer is enabled to implement the method according to any one of the first aspect to the sixth aspect or the possible designs thereof.

According to a twelfth aspect, this application further provides a chip, including a processor. The processor is coupled to a memory, and is configured to read and execute program instructions stored in the memory, so that the chip implements the method according to any one of the first aspect to the sixth aspect or the possible designs thereof.

For each of the seventh aspect to the twelfth aspect and technical effects that may be achieved by each of the seventh aspect to the twelfth aspect, refer to the foregoing descriptions of the technical effects that may be achieved by various possible solutions in the first aspect to the sixth aspect. Details are not described herein again.

### BRIEF DESCRIPTION OF DRAWINGS

FIG. 1 is a schematic diagram of an architecture of a communications system according to this application;
FIG. 2 is a flowchart of a downlink scheduling method according to this application;
FIG. 3 is a schematic diagram of a downlink scheduling method according to this application;
FIG. 4 is a flowchart of a downlink scheduling method according to this application;
FIG. 5 is a flowchart of a downlink scheduling method according to this application;
FIG. 6 is a structural diagram of a communications apparatus according to this application; and
FIG. 7 is a structural diagram of a communications apparatus according to this application.

### DESCRIPTION OF EMBODIMENTS

For ease of understanding a method provided in embodiments of this application, some terms used in embodiments of this application are explained before embodiments of this application are described.
1. Carrier aggregation (carrier aggregation, CA): Carrier aggregation means aggregating two or more component carriers (component carrier, CC) to support a larger transmission bandwidth (for example, 100 megahertz (MHz)). Each CC corresponds to one independent cell (cell). One CC may correspond to one cell. A 3GPP (3rd generation partnership project) protocol specifies that one terminal may be configured with a plurality of CCs (for example, may be configured with a maximum of five CCs or 32 CCs), and one of the plurality of CCs of the terminal device may be referred to as a primary cell (primary cell, PCell), which is a cell on which the terminal device performs initial connection establishment, or a cell on which the terminal device performs radio resource control (radio resource control, RRC) connection reestablishment, or a specified primary cell in a handover (handover) process. The PCell is responsible for RRC communication with the terminal. A remaining CC is referred to as a secondary cell (secondary cell, SCell). The SCell is added during RRC-based reconfiguration of the terminal device, and is used to provide an additional radio resource.
2. Bandwidth part (bandwidth part, BWP): A bandwidth part is a part of a system bandwidth. A system bandwidth may be a bandwidth of one carrier. A system bandwidth may be very large, for example, may be 200 MHz or 400 MHz. Some terminal devices cannot support such a large system bandwidth. Therefore, a network device may configure a BWP (a part of the system bandwidth), for example, 20 MHz, for the terminal device, so that the terminal device can communicate with the network device at 20 MHz. BWPs may be classified into a downlink BWP (downlink BWP, DL BWP) and an uplink BWP (uplink BWP, UL BWP). A network device may configure a plurality of DL BWPs and a plurality of UL BWPs for a terminal, and activate (activate) at least one DL BWP and at least one UL BWP. The terminal receives, on the activated DL BWP, a downlink signal sent by the network device, where the downlink signal includes but is not limited to downlink control signaling and downlink data. The terminal sends an uplink signal on the activated UL BWP, where the uplink signal includes but is not limited to uplink control signaling, uplink data, a scheduling request (scheduling request, SR), a sounding reference signal (sounding reference signal, SRS), a channel state information (channel state information, CSI)/channel quality indicator (channel quality indicator, CQI) feedback, and the like.
3. Quantity of MIMO layers: A quantity of MIMO layers may also be referred to as a quantity of transmission layers, spatial layers, layers, transmission streams, spatial streams, streams, or the like. A terminal device may determine a rank (rank) of a channel matrix based on a channel obtained through channel estimation. A network device may determine, with reference to the rank that is of the channel matrix and that is fed back by the terminal device, a maximum quantity of downlink MIMO layers that can be used for communication between the network device and the terminal device. Usually, the maximum quantity of downlink MIMO layers that can be used for communication between the network device and the terminal device may be determined by a quantity of transmit antenna ports configured for the network device and a quantity of receive antenna ports configured for the terminal device. For example, the maximum quantity of downlink MIMO layers may be less than or equal to the smaller of the quantity of transmit antenna ports configured for the network device and the quantity of receive antenna ports configured for the terminal device.

The following further describes the technical solutions in this application in detail with reference to the accompanying drawings.

Embodiments of this application provide a downlink scheduling method and an apparatus. The method and apparatus in this application are based on a same technical idea. Because problem resolution principles of the method and the apparatus are similar, mutual reference may be made between implementations of the apparatus and the method, and repeated parts are not described again.

In the descriptions of this application, words such as "first" and "second" are merely intended for differentiated description, and shall not be understood as an indication or implication of relative importance or an indication or implication of a sequence.

In the descriptions of this application, "at least one" means one or more, and "a plurality of" means two or more.

To describe the technical solutions in embodiments of this application more clearly, the following describes in detail, with reference to the accompanying drawings, the downlink scheduling method and the apparatus provided in embodiments of this application.

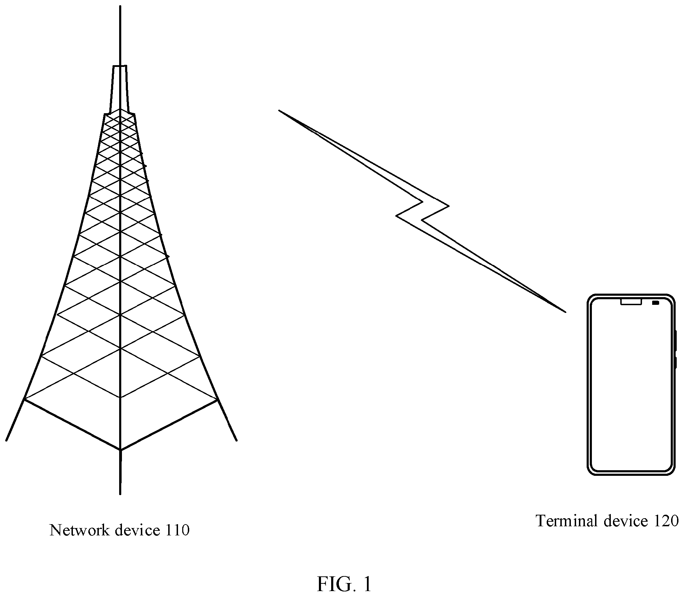

FIG. 1 shows an architecture of a communications system according to an embodiment of this application. The architecture of the communications system includes a network device 110 and a terminal device 120. The terminal device 120 may communicate with the network device 110.

The network device 110 may be a device having a wireless transceiving function or a chip of a device having a wireless transceiving function. The network device includes but is not limited to a gNodeB (next generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like, or may be a network node that constitutes a gNB or a transmission point, such as a baseband unit (BBU) or a distributed unit (distributed unit, DU).

In some deployments, the gNB may include a centralized unit (centralized unit, CU) and a DU. The gNB may further include a radio frequency unit (radio frequency unit, RFU). The CU implements some of functions of the gNB, and the DU implements some of the functions of the gNB. For example, the CU implements functions of a radio resource control layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. RRC layer information finally becomes PHY layer information, or is converted from PHY layer information. Therefore, in such an architecture, higher layer signaling, such as RRC layer signaling or PHCP layer signaling, may also be considered as being sent by the DU or sent by the DU and the RFU. It can be understood that the network device may be a CU node, a DU node, or a device that includes a CU node and a DU node. In addition, the CU may be classified as a network device in a radio access network RAN, or the CU may be classified as a network device in a core network (core network, CN). This is not limited.

The terminal device 120 may also be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device in this embodiment of this application may be a mobile phone (mobile phone), a tablet computer (Pad), a computer with a wireless transceiving function, a virtual reality (virtual reality, VR) terminal device, an augmented reality (augmented reality, AR) terminal device, a wireless terminal in industrial control (industrial control), a wireless terminal in intelligent driving or self driving (self driving), a wireless terminal in telemedicine (remote medical or telemedicine), a wireless terminal in a smart grid (smart grid), a wireless terminal in transportation safety (transportation safety), a wireless terminal in a smart city (smart city), a smart wearable device (smart glasses, a smartwatch, a smart headset, or the like), a wireless terminal in a smart home (smart home), or the like. An application scenario is not limited in this embodiment of this application. In this application, a terminal device having a wireless transceiving function and a chip that may be disposed in the terminal device are collectively referred to as a terminal device. The terminal device may be located in a coverage area of the network device. The terminal may work on a plurality of frequency resource units (CCs or BWPs) simultaneously. For example, the terminal may receive, on one or more CCs (or BWPs), data/information sent by the network device, or send data/information or the like to the network device on one or more CCs (or BWPs).

It should be noted that the communications system in FIG. 1 may include but is not limited to a long term evolution (long term evolution, LTE) system, a 5th generation (5th Generation, 5G) mobile communications system, a machine to machine (machine to machine, M2M) communications system, a sidelink (Sidelink) communications system, or another future evolved communications system, such as a 6G system. A 5G radio air interface technology is referred to as new radio (new radio, NR), and a 5G system may also be referred to as an NR system.

Currently, each operator has a spectrum of a plurality of contiguous or non-contiguous frequency band. A carrier aggregation technology aggregates a plurality of contiguous or non-contiguous component carriers into a larger bandwidth, to improve spectrum resource utilization, thereby meeting a higher transmission rate requirement of a mobile terminal user.

As a service transmission rate and a data volume that are required by a terminal device are increasingly high, a network device increasingly needs the terminal device to report a carrier aggregation capability of the terminal device. For example, in an LTE network, the carrier aggregation technology aggregates two to five LTE component carriers CCs, so that a maximum transmission bandwidth of 100 MHz can be achieved, thereby increasing uplink and downlink transmission rates. The carrier aggregation capability may include n frequency band combinations, where n is a positive integer greater than 1. Each frequency band combination includes different types of frequency bands (band, also referred to as "frequency band"). Each frequency band corresponds to a different type of carrier combination. Different types of carrier combinations correspond to different carrier quantities, carrier bandwidths, subcarrier spacings, quantities of multiple-input multiple-output (multiple-input multiple-output, MIMO) layers, and the like.

For example, the carrier aggregation capability of the terminal device may include a frequency band combination 1 and a frequency band combination 2. The frequency band combination 1 includes a frequency band 1, a frequency band 2, and a frequency band 3. A carrier combination corresponding to the frequency band 1 is of a type A, which may indicate that the terminal device supports only one carrier in downlink. A carrier combination corresponding to the frequency band 2 is of a type B, which may indicate that the terminal device supports carrier aggregation of two CCs in downlink. A carrier combination corresponding to the frequency band 3 is of a type C, which may indicate that the terminal device supports carrier aggregation of three CCs in downlink. The frequency band combination 2 includes a frequency band 1, a frequency band 2, and a frequency band 3. A carrier combination corresponding to the frequency band 1 is of the type A. A carrier combination corresponding to the frequency band 2 is of a type D, which may indicate that the terminal device supports carrier aggregation of four CCs in downlink. A carrier combination corresponding to the frequency band 3 is of a type E, which may indicate that the terminal device supports carrier aggregation of five CCs in downlink. It should be noted that, for a same frequency band, if the frequency band corresponds to a same carrier combination and a same capability parameter, the frequency band represents a same frequency band (for example, the frequency band 1); or if the frequency band corresponds to different carrier combinations and different capability parameters, the frequency band represents different frequency bands (for example, the frequency band 2 and the frequency band 3). After obtaining the carrier aggregation capability of the terminal device, the network device can learn a frequency band combination specifically supported by the terminal device, and can perform suitable carrier aggregation configuration for the terminal device based on the supported frequency band combination.

Usually, after accessing a cell, the terminal device may report a terminal capability by using RRC signaling. The terminal capability may include a carrier combination supported by the terminal device, a maximum quantity of MIMO layers supported on each component carrier in each carrier combination, and the like. For example, the terminal device reports three different carrier combinations, where each carrier combination includes one or more component carriers CCs. A first carrier combination includes a CC1 and a CC2, a second carrier combination includes the CC1, and a third carrier combination includes the CC1, the CC2, and a CC3. In addition, for each CC, the terminal device further reports a maximum downlink transmission layer quantity capability, namely, a maximum quantity of physical downlink shared channel (physical downlink shared channel, PDSCH) MIMO layers (maxNumberMIMO-LayersPDSCH), supported by the terminal device on the CC. The maximum quantity of PDSCH MIMO layers may also be referred to as a maximum quantity of downlink MIMO layers. The maximum quantity of PDSCH MIMO layers is denoted by M. For example, in the first carrier combination, M corresponding to the CC1 is equal to 4, and M corresponding to the CC2 is equal to 4; in the second carrier combination, M corresponding to the CC1 is equal to 8; and in the third carrier combination, M corresponding to the CC1 is equal to 4, M corresponding to the CC2 is equal to 2, and M corresponding to the CC3 is equal to 2.

Currently, an NR system protocol supports that a terminal device reports a maximum quantity M of downlink MIMO layers that can be supported by the terminal device. A granularity of the reporting is a carrier level, that is, the maximum quantity M of downlink MIMO layers supported by the terminal device is applicable to one component carrier CC. If there are a plurality of BWPs on the CC, it indicates that the plurality of BWPs all support the same maximum quantity M of downlink MIMO layers.

After the terminal device reports the capability, the network device configures PDSCH parameters for the terminal device by using RRC signaling, where the PDSCH parameters include a carrier combination for PDSCH transmission, and a maximum quantity of downlink transmission layers, namely, a maximum quantity of MIMO layers (maxMIMO-Layers), corresponding to each carrier. The maximum quantity of MIMO layers that is configured by the network device is denoted by N. In this case, a value of N corresponding to each carrier should be less than or equal to a value of M corresponding to the carrier. For example, the carrier combination configured by the network device for PDSCH transmission is the CC1, the CC2, and the CC3. In this case, for example, if N corresponding to the CC1 is equal to 4, N corresponding to the CC2 is equal to 2, and N corresponding to the CC3 is equal to 2, that is, when all of the CC1, the CC2, and the CC3 are in an activated state, maximum quantities of MIMO layers corresponding to the carriers are 4, 2, and 2, respectively; for another example, if N corresponding to the CC1 is equal to 3, N corresponding to the CC2 is equal to 2, and N corresponding to the CC3 is equal to 1, that is, when all of the CC1, the CC2, and the CC3 are in an activated state, maximum quantities of MIMO layers corresponding to the carriers are 3, 2, and 1, respectively. In a carrier aggregation mechanism, the network device may indicate, by sending media access control control element (media access control control element, MAC CE) signaling, the terminal device to activate or deactivate one or more carriers in the carrier combination configured by using the RRC signaling. For example, when the maximum quantities of MIMO layers corresponding to the CC1, the CC2, and the CC3 are respectively 4, 2, and 2, after the base station deactivates the CC2 and the CC3 by using a MAC CE, the maximum quantity of MIMO layers on the CC1 is still 4. If the base station reconfigures the PDSCH parameters by using RRC signaling, where a carrier configured for PDSCH transmission is the CC1 and N corresponding to the CC1 is equal to 8, the maximum quantity of MIMO layers on the CC1 changes to 8.

Therefore, in the foregoing carrier aggregation mechanism, the network device configures the PDSCH parameters for the terminal device by using the RRC signaling, that is, configures, for the terminal device, the specific carrier combination for PDSCH transmission and the maximum quantity of MIMO layers that corresponds to each carrier in the carrier combination. After deactivating one or more carriers by using the MAC CE, the network device can perform scheduling only based on the previously configured PDSCH parameters. In other words, a maximum quantity N of MIMO layers on an activated carrier is still a value configured by using RRC, and a receive antenna port in a frequency band corresponding to a deactivated carrier cannot be fully utilized to increase a quantity of downlink transmission layers. To change the maximum quantity of MIMO layers on the activated carrier, the network device needs to reconfigure the PDSCH parameters by using the RRC signaling. As a result, a reconfiguration delay is large, and data transmission during reconfiguration is impaired.

Based on this, this application proposes a downlink scheduling method and an apparatus, so as to dynamically switch a maximum quantity of MIMO layers on an activated carrier, thereby improving downlink transmission performance, and preventing a network device from reconfiguring PDSCH parameters by using RRC signaling, so that a delay and overheads are reduced.

It should be noted that, in embodiments of this application, the downlink scheduling method may be implemented by a terminal device, or a processor, a chip or chip system, a functional module, or the like in a terminal device; or the downlink scheduling method may be implemented by a network device, or a processor, a chip or chip system, a functional module, or the like in a network device. In the following embodiments, only a terminal device and a network device are used as examples to describe in detail the downlink scheduling method provided in this application, but this application is not limited thereto.

The method and related apparatus provided in embodiments of this application are described below in detail with reference to the accompanying drawings. It should be noted that a presentation sequence of embodiments of this application merely represents a sequence of the embodiments, but does not represent superiority or inferiority of the technical solutions provided in the embodiments.

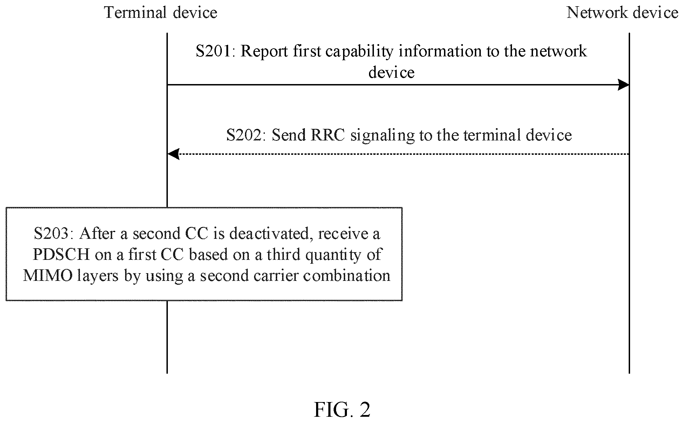

Based on the foregoing descriptions, an embodiment of this application provides a downlink scheduling method, which is applicable to the communications system shown in FIG. 1. As shown in FIG. 2, the method may include but is not limited to the following steps.

S201: A terminal device reports first capability information to a network device. Correspondingly, the network device receives the first capability information reported by the terminal device.

The first capability information indicates that values of a maximum quantity of downlink MIMO layers supported by the terminal device on a first component carrier CC include at least a first maximum quantity M1 of downlink MIMO layers and a second maximum quantity M2 of downlink MIMO layers. The first maximum quantity M1 of downlink MIMO layers is different from the second maximum quantity M2 of downlink MIMO layers.

It can be understood that, because user terminals are different from each other and support different capabilities, the network device needs to know a capability of each user terminal to better serve the user terminal. In a process of registering with a network, the terminal device needs to report, to the network device, a capability supported by the terminal device, so that the network device allocates a resource based on the capability of the terminal device. In a 5G NR system, a capability (capability) of a terminal device is reported by using UE-NR-capability, where the UE-NR-capability includes a 5G capability parameter supported by the UE, and a carrier aggregation capability supported by the terminal device is also reported by using the UE-NR-capability.

Further, the first capability information reported by the terminal device further includes a plurality of carrier combinations supported by the terminal device, the plurality of carrier combinations include a first carrier combination, and the first carrier combination includes at least the first component carrier CC and a second component carrier CC.

For example, in step S201, the terminal device reports three different carrier combinations to the network device, where each carrier combination includes one or more component carriers CCs. For example, the first carrier combination includes the CC1 and the CC2, a second carrier combination includes the CC1, and a third carrier combination includes the CC1, the CC2, and a CC3. In addition, the terminal device further reports, to the network device, a maximum quantity of PDSCH MIMO layers, namely, a maximum quantity of downlink MIMO layers, supported by the terminal device on each CC. The maximum quantity of downlink MIMO layers is denoted by M. For example, in the first carrier combination, M1_CC1 corresponding to the CC1 is equal to 4, and M1_CC2 corresponding to the CC2 is equal to 4; in the second carrier combination, M2_CC1 corresponding to the CC1 is equal to 8; and in the third carrier combination, M1_CC1 corresponding to the CC1 is equal to 4, M2_CC2 corresponding to the CC2 is equal to 2, and M1_CC3 corresponding to the CC3 is equal to 2. In other words, the values of the maximum quantity of downlink MIMO layers supported by the terminal device on the CC1 include the first maximum quantity of downlink MIMO layers, that is, M1_CC1=4, and the second maximum quantity of downlink MIMO layers, that is, M2_CC2=8.

For example, before the second component carrier CC2 of the terminal device is deactivated, when the network device performs PDSCH scheduling based on the first carrier combination CC1+CC2, the maximum quantity of downlink MIMO layers supported by the terminal device on the first component carrier CC1 is the first maximum quantity of downlink MIMO layers: M1_CC1=4. After the second component carrier CC2 of the terminal device is deactivated, the network device performs PDSCH scheduling based on the second component carrier combination CC1. In this case, the maximum quantity of downlink MIMO layers supported by the terminal device on the first component carrier CC1 is the second maximum quantity of downlink MIMO layers: M2_CC1=8. The second maximum quantity of downlink MIMO layers supported by the terminal device on the first component carrier CC1 is not less than the first maximum quantity of downlink MIMO layers supported by the terminal device on the first component carrier CC1.

With reference to the foregoing embodiment, the terminal device may further report second capability information to the network device. The second capability information indicates that the terminal device supports dynamically switching the maximum quantity of downlink MIMO layers that corresponds to the first component carrier CC, that is, the terminal device can switch, without RRC-based reconfiguration, the maximum quantity of downlink MIMO layers that corresponds to the first component carrier CC.

The first capability information and the second capability information may be reported in a same information element (information element), or may be reported in different information elements.

S202: The network device sends RRC signaling to the terminal device. Correspondingly, the terminal device receives the RRC signaling sent by the network device.

The RRC signaling configures maximum MIMO layer quantity information corresponding to the first component carrier CC. The maximum MIMO layer quantity information includes at least a first maximum quantity N1 of MIMO layers and a second maximum quantity N2 of MIMO layers. The first maximum quantity N1 of MIMO layers is not greater than the first maximum quantity M1 of downlink MIMO layers, and the second maximum quantity N2 of MIMO layers is not greater than the second maximum quantity M2 of downlink MIMO layers.

For example, the maximum MIMO layer quantity information may also be referred to as a maximum MIMO layer quantity list, a maximum MIMO layer quantity set, or a maximum MIMO layer quantity group.

In another possible implementation, the maximum MIMO layer quantity information corresponding to the first component carrier CC may be alternatively configured by using other signaling, for example, physical layer signaling, and is not limited to the RRC signaling.

In an implementation, the network device configures PDSCH parameters by using the RRC signaling based on the carrier combinations reported by the terminal device. Information about the PDSCH parameters may include maximum MIMO layer quantity information. Specifically, the PDSCH parameters configured by the network device include a maximum MIMO layer quantity list (maxMIMO-Layers_List) corresponding to each CC or BWP, where each maximum MIMO layer quantity list may include one or more maximum quantities of MIMO layers (maxMIMO-Layers). For example, the PDSCH parameters configured by the network device for the terminal device may be CC1 (N1_CC1=4, N2_CC1=8) + CC2 (N1_CC2=2, N2_CC2=4) + CC3 (N1_CC3=2), and the PDSCH parameters include maximum MIMO layer quantity lists corresponding to the CC1, the CC2, and the CC3. CC1 (N1_CC1=4, N2_CC1=8) indicates that the maximum MIMO layer quantity list corresponding to the CC1 may include the first maximum quantity N1_CC1 of MIMO layers (four layers) and the second maximum quantity N2_CC1 of MIMO layers (eight layers). In other words, the maximum MIMO layer quantity information that corresponds to the CC1 and that is configured by using the RRC signaling includes the first maximum quantity N1_CC1 of MIMO layers and the second maximum quantity N2_CC1 of MIMO layers. Likewise, a maximum quantity of MIMO layers that corresponds to the CC2 includes N1_CC2 (two layers) and N2_CC2 (four layers), and a maximum quantity of MIMO layers that corresponds to the CC3 includes N1_CC3 (two layers).

The first maximum quantity N1_CC1 of MIMO layers and the second maximum quantity N2_CC1 of MIMO layers corresponding to the CC 1 are less than or equal to the maximum quantity of downlink MIMO layers supported on the CC1, that is, N1_CC1 ≤M1_CC1 and N2_CC1 ≤M2_CC1. Likewise, the maximum quantities of MIMO layers corresponding to the CC2 and the CC3 are also less than or equal to maximum quantities of downlink MIMO layers supported on the CC2 and the CC3.

It can be understood that, in the foregoing implementation, a quantity of maximum quantities N of MIMO layers included in the maximum MIMO layer quantity list that corresponds to each CC and that is configured by the network device may be less than or equal to a quantity of maximum quantities M of downlink MIMO layers reported by the terminal device.

In another implementation, the network device configures, by using the RRC signaling based on the carrier combinations reported by the terminal device, a carrier combination and a maximum quantity of MIMO layers that corresponds to each CC or BWP in each carrier combination. For example, carrier combinations configured by the network device for the terminal device may include the first carrier combination CC1 (N1_CC1=4) + CC2 (N1_CC2=4), the second carrier combination CC1 (N2_CC1=8), and the third carrier combination CC1 (N1_CC1=4) + CC2 (N2_CC2=2) + CC3 (N1_CC3=2). CC1 (N1_CC1=4) + CC2 (N1_CC2=4) indicates that maximum quantities N of MIMO layers corresponding to the CC1 and the CC2 in the first carrier combination are 4 and 4, respectively. CC1 (N2_CC1=8) indicates that a maximum quantity N of MIMO layers that corresponds to the CC1 in the second carrier combination is 8. CC1 (N1_CC1=4) + CC2 (N2_CC2=2) + CC3 (N1_CC3=2) indicates that maximum quantities N of MIMO layers corresponding to the CC1, the CC2, and the CC3 in the third carrier combination are 4, 2, and 2, respectively. In this implementation, the maximum MIMO layer quantity information that corresponds to the CC1 and that is configured by the network device by using the RRC signaling includes the first maximum quantity of MIMO layers (N1_CC1=4) and the second maximum quantity of MIMO layers (N2_CC1=8).

It can be understood that, in the foregoing implementation, a quantity of carrier combinations configured by the network device may be less than or equal to a quantity of the carrier combinations reported by the terminal device. The network device may determine a maximum quantity of simultaneously activated CCs based on a service requirement, a channel condition, or the like, and then configure a carrier combination for the terminal device based on the maximum quantity of simultaneously activated CCs. For example, when the maximum quantity of simultaneously activated CCs is 3, carrier combinations configured by the network device for the terminal device may include the first carrier combination, the second carrier combination, and the third carrier combination. For another example, when the maximum quantity of simultaneously activated CCs is 2, carrier combinations configured by the network device for the terminal device may include the first carrier combination and the second carrier combination.

In the foregoing implementation, the network device configures, based on a carrier granularity, maximum MIMO layer quantity information corresponding to each component carrier. Optionally, the network device may alternatively configure, based on a BWP granularity, maximum MIMO layer quantity information corresponding to each BWP. For a configuration method, refer to the foregoing descriptions. A maximum quantity of MIMO layers that corresponds to a BWP is not greater than a maximum quantity of MIMO layers that corresponds to a CC at which the BWP is located.

S203: After the second component carrier CC of the terminal device is deactivated, the terminal device receives a PDSCH on the first component carrier CC based on a third quantity of MIMO layers by using the second carrier combination, where the third quantity of MIMO layers is not greater than the second maximum quantity N2 of MIMO layers. The plurality of carrier combinations reported by the terminal device include the second carrier combination, and the second carrier combination does not include the second component carrier CC.

Further, before the second component carrier CC of the terminal device is deactivated, the terminal device receives a PDSCH on the first component carrier CC based on a fourth quantity of MIMO layers by using the first carrier combination. The fourth quantity of MIMO layers is not greater than the first maximum quantity N1 of MIMO layers. In other words, a quantity of MIMO layers actually used by the terminal device may be less than a maximum quantity of MIMO layers that is configured by the network device.

For a specific implementation process of step S203, refer to descriptions of the following three examples.

Example 1: The network device sends activation/deactivation indication information to the terminal device by using a MAC CE, so that the terminal device activates/deactivates the second component carrier CC, and then the terminal device receives the PDSCH by using the third quantity of MIMO layers. In other words, the network device and the terminal device may jointly switch a maximum quantity of MIMO layers for use, and the network device does not need to perform RRC-based reconfiguration on the terminal device.

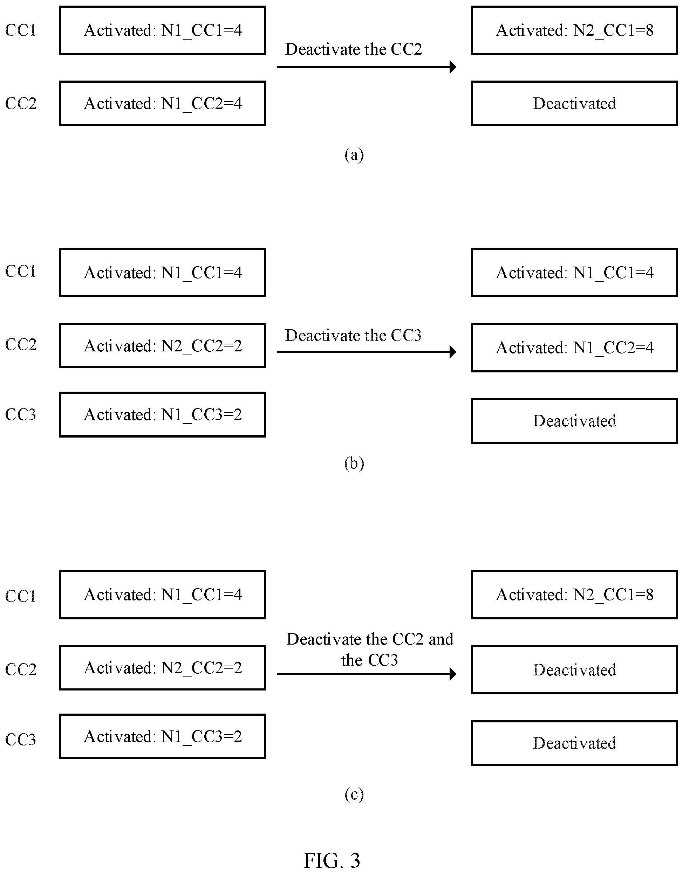

For example, as shown in (a) in FIG. 3, when the network device performs PDSCH scheduling by using the first carrier combination CC1 (N1_CC1=4) + CC2 (N1_CC2=4), after the terminal device deactivates the CC2 based on the indication information sent by the network device, the network device may perform PDSCH scheduling directly by using the second carrier combination CC1 (N2_CC1=8). In other words, the terminal device may automatically switch the maximum quantity of MIMO layers without RRC-based reconfiguration. After the second component carrier CC2 of the terminal device is deactivated, the terminal device may receive the PDSCH on the CC1 based on the third quantity of MIMO layers by using the second carrier combination CC1 (N2_CC1=8) configured by the network device. It can be understood that the third quantity of MIMO layers is not greater than the second maximum quantity N2_CC1 of MIMO layers that corresponds to the CC1. Before the second component carrier CC2 of the terminal device is deactivated, the terminal device receives the PDSCH on the CC1 based on the fourth quantity of MIMO layers by using the first carrier combination CC1 (N1_CC1=4) + CC2 (N1_CC2=4) configured by the network device. Likewise, the fourth quantity of MIMO layers is not greater than the first maximum quantity N1_CC1 of MIMO layers that corresponds to the CC1.

It should be noted that, in this embodiment of this application, the first carrier combination reported by the terminal device is CC1 (M1_CC1=4) + CC2 (M1_CC2=4), and the first carrier combination configured by the network device may be CC1 (N1≤M1_CC1=4) + CC2 (N1≤M1_CC2=4). The first carrier combination is a combination including the CC1 and the CC2, and the carrier combination reported by the terminal device and the carrier combination configured by the network device are not distinguished. This is also the case for the second carrier combination and the third carrier combination.

For another example, as shown in (b) in FIG. 3, when the network device performs PDSCH scheduling by using the carrier combination CC1 (N1_CC1=4) + CC2 (N2_CC2=2) + CC3 (N1_CC3=2), the network device sends carrier deactivation indication information to the terminal device, where the indication information may be carried in a MAC CE; and after the terminal device deactivates the CC3 based on the indication information sent by the network device, the network device may perform PDSCH scheduling by using the carrier combination CC1 (N1_CC1=4) + CC2 (N1_CC2=4). As shown in (c) in FIG. 3, after the terminal device deactivates the CC2 and the CC3 based on the indication information sent by the network device, the network device may perform PDSCH scheduling by using the carrier combination CC1 (N2_CC1=8).

For another example, when the network device performs PDSCH scheduling by using the carrier combination CC1 (N1_CC1=4) + CC2 (N1_CC2=4), the network device sends carrier activation indication information, so that the terminal device activates the CC3; and then the network device may perform scheduling by using the carrier combination CC1 (N1_CC1=4) + CC2 (N2_CC2=2) + CC3 (N1_CC3=2), without performing RRC-based reconfiguration.

For example, after the network device and the terminal device jointly switch a maximum quantity of MIMO layers, the terminal device may determine, based on a current maximum quantity of MIMO layers, whether the network device can transmit only a single codeword on one PDSCH or can transmit dual codewords on one PDSCH. For example, when a quantity of MIMO layers corresponding to a PDSCH scheduled by the network device does not exceed 4, only a single codeword can be transmitted on the PDSCH; or when a quantity of MIMO layers corresponding to a PDSCH scheduled by the network device exceeds 4, two codewords can be transmitted on the PDSCH. DCI corresponding to single-codeword transmission and DCI corresponding to dual-codeword transmission include different quantities of bits. The terminal device may determine a DCI length and a blind detection behavior based on the maximum quantity of MIMO layers.

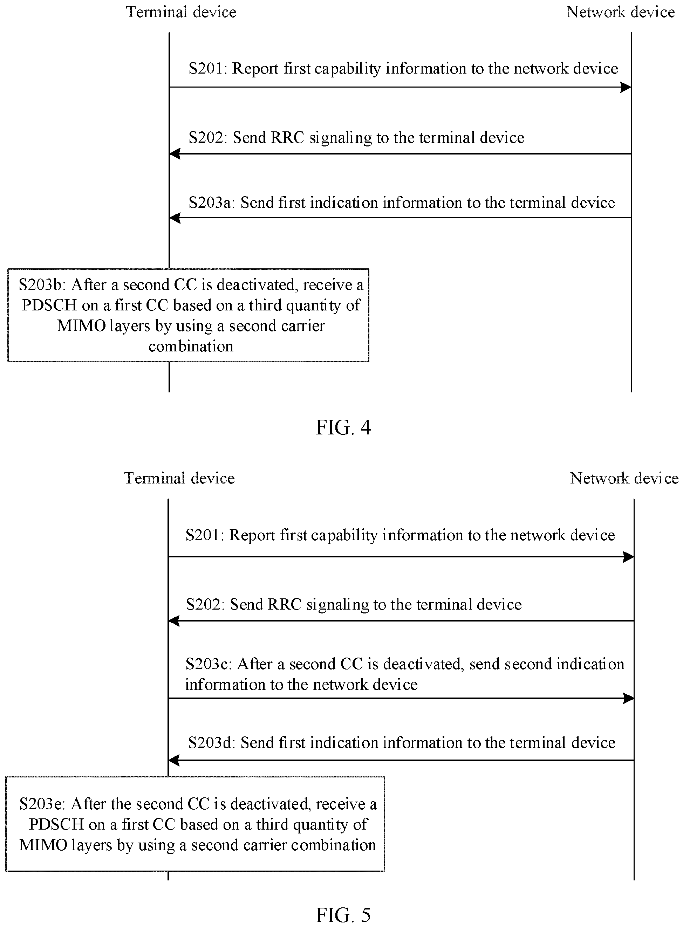

Example 2: As shown in FIG. 4, a specific implementation process of S203 may include S203a and S203b.

S203a: The network device may send first indication information to the terminal device. The first indication information may indicate the second maximum quantity N2 of MIMO layers that corresponds to the first component carrier CC after the second component carrier CC is deactivated. In other words, the network device can dynamically indicate a maximum quantity N of MIMO layers that corresponds to each activated CC or BWP.

In some embodiments, after the network device activates/deactivates one or more CCs by using a MAC CE, the network device may send the first indication information to the terminal device by using a MAC CE or downlink control information (downlink control information, DCI), to dynamically indicate the maximum quantity N of MIMO layers that corresponds to each activated CC or BWP. For example, when the network device performs PDSCH scheduling by using the first carrier combination CC1 (N1_CC1=4) + CC2 (N1_CC2=4), the network device sends carrier deactivation indication information to the terminal device, where the indication information may be carried in a MAC CE; and after the terminal device deactivates the CC2 based on the indication information sent by the network device, the network device may send the first indication information to the terminal device, where the first indication information indicates that the maximum quantity N2_CC1 of MIMO layers that corresponds to the CC1 is 8.

In some other embodiments, the first indication information may further indicate the terminal device to activate/deactivate one or more CCs. The network device may send the first indication information to the terminal device by using a MAC CE or downlink control information (downlink control information, DCI), to indicate the terminal device to activate/deactivate a carrier, and indicate the maximum quantity N of MIMO layers that corresponds to each activated CC or BWP. For example, when the network device performs PDSCH scheduling by using the first carrier combination CC1 (N1_CC1=4) + CC2 (N1_CC2=4), the network device sends the first indication information to the terminal device, where the first indication information indicates the terminal device to deactivate the CC2, and the first indication information further indicates that the maximum quantity N2_CC1 of MIMO layers that corresponds to the CC1 is 8.

Optionally, the first indication information may be specifically a MAC CE message, a DCI message, or another physical (physical, PHY) layer message. It should be noted that, during specific implementation, the first indication information may be alternatively a new message, or may be carried in another message.

S203b: After the second component carrier CC of the terminal device is deactivated, the terminal device receives the PDSCH on the first component carrier CC based on the third quantity of MIMO layers by using the second carrier combination. The third quantity of MIMO layers is not greater than the second maximum quantity N2 of MIMO layers.

For example, after the CC2 of the terminal device is deactivated, the terminal device receives the PDSCH on the CC1 based on the third quantity of MIMO layers by using the second carrier combination CC1 (N2_CC1=8), where the third quantity of MIMO layers is not greater than N2_CC1=8 corresponding to the CC1.

Example 3: As shown in FIG. 5, a specific implementation process of S203 may include S203c, S203d, and S203e.

S203c: After the second component carrier CC of the terminal device is deactivated, the terminal device sends second indication information to the network device, where the second indication information indicates that the maximum quantity of downlink MIMO layers supported by the terminal device on the first component carrier CC is the second maximum quantity M2 of downlink MIMO layers.

S203d: The network device sends first indication information to the terminal device, where the first indication information indicates the second maximum quantity N2 of MIMO layers that corresponds to the first component carrier CC. The second maximum quantity N2 of MIMO layers is not greater than the second maximum quantity M2 of downlink MIMO layers.

In other words, the terminal device can dynamically report a maximum quantity M of downlink MIMO layers supported on each CC, and the network device can dynamically indicate, based on the maximum quantity M of downlink MIMO layers that is supported on each CC and that is reported by the terminal device, a maximum quantity N of MIMO layers that corresponds to the activated CC.

Optionally, the first indication information may be carried in a MAC CE message, a DCI message, or another physical layer message. The second indication information may be carried in uplink control information (uplink control information, UCI).

For example, when the network device performs PDSCH scheduling by using the first carrier combination CC1 (N1_CC1=4) + CC2 (N1_CC2=4), the network device sends carrier deactivation indication information to the terminal device; and after the terminal device deactivates the CC2 based on the indication information sent by the network device, the terminal device may send the second indication information to the network device, to indicate that the maximum quantity M2_CC1 of downlink MIMO layers supported on the CC1 is 8. After receiving the second indication information, the network device may send the first indication information to the terminal device. The first indication information indicates that the maximum quantity N2_CC1 of MIMO layers that corresponds to the CC1 is 8.

S203e: The terminal device receives the PDSCH on the first component carrier CC based on the third quantity of MIMO layers by using the second carrier combination. The third quantity of MIMO layers is not greater than the second maximum quantity N2 of MIMO layers.

For example, after the CC2 of the terminal device is deactivated, the terminal device receives the PDSCH on the CC1 based on the third quantity of MIMO layers by using the second carrier combination CC1 (N2_CC1=8), where the third quantity of MIMO layers is not greater than N2_CC1=8 corresponding to the CC1.

In the foregoing embodiment, after the second CC of the terminal device is deactivated, the network device skip sending an RRC-based PDSCH reconfiguration message, and the terminal device skip receiving an RRC-based PDSCH reconfiguration message, so that overheads caused by RRC-based reconfiguration can be avoided.

In the foregoing implementation, the network device configures, by using the RRC signaling, the maximum MIMO layer quantity information corresponding to the first component carrier CC, where the maximum MIMO layer quantity information includes the first maximum quantity N1 of MIMO layers and the second maximum quantity N2 of MIMO layers, that is, the network device performs PDSCH configuration enhancement.

In an optional method, the network device does not need to perform PDSCH configuration enhancement. The method may specifically include: The terminal device reports first capability information to the network device, where the first capability information indicates that values of a maximum quantity of downlink MIMO layers supported by the terminal device on a first component carrier CC include at least a first maximum quantity M1 of downlink MIMO layers and a second maximum quantity M2 of downlink MIMO layers; and the terminal device receives RRC signaling sent by the network device, where the RRC signaling configures a first maximum quantity N1 of MIMO layers that corresponds to the first component carrier CC. The first maximum quantity N1 of MIMO layers is not greater than the first maximum quantity M1 of downlink MIMO layers.

In another possible implementation, the first maximum quantity N1 of MIMO layers that corresponds to the first component carrier CC may be alternatively configured by using other signaling, for example, physical layer signaling, and is not limited to the RRC signaling.

In addition, the terminal device may further report second capability information to the network device. The second capability information indicates that the terminal device supports dynamically switching the maximum quantity of downlink MIMO layers that corresponds to the first component carrier CC, that is, the terminal device can switch, without RRC-based reconfiguration, the maximum quantity of downlink MIMO layers that corresponds to the first component carrier CC.

For a specific process in which the terminal device reports the first capability information and the second capability information to the network device, specific content included in the first capability information and the second capability information, and the like, refer to the foregoing descriptions. Details are not described herein again in this application.

For example, the network device configures, by using the RRC signaling based on carrier combinations reported by the terminal device, a carrier combination and a maximum quantity of MIMO layers that corresponds to each CC or BWP in the carrier combination. For example, the carrier combination configured by the network device for the terminal device may be CC1 (N1_CC1=4) + CC2 (N1_CC2=4). CC1 (N1_CC1=4) + CC2 (N1_CC2=4) indicates that maximum quantities of MIMO layers corresponding to the CC1 and the CC2 in the carrier combination are 4 and 4, respectively.

In a possible implementation, the terminal device receives first indication information sent by the network device, where the first indication information indicates a second maximum quantity N2 of MIMO layers that corresponds to the first CC after a second CC is deactivated, and the second maximum quantity N2 of MIMO layers is not greater than the second maximum quantity M2 of downlink MIMO layers. The first CC and the second CC are in a first carrier combination.

In some embodiments, after the network device activates/deactivates one or more CCs by using a MAC CE, the network device sends the first indication information to the terminal device, to dynamically indicate a maximum quantity N of MIMO layers that corresponds to each activated CC or BWP. For example, when the network device performs PDSCH scheduling by using the first carrier combination CC1 (N1_CC1=4) + CC2 (N1_CC2=4), the network device sends carrier deactivation indication information to the terminal device; and after the terminal device deactivates the CC2 based on the indication information sent by the network device, the network device may send the first indication information to the terminal device, where the first indication information indicates that a maximum quantity of MIMO layers that corresponds to the CC1 is N2_CC1=8.

In some other embodiments, the first indication information may further indicate the terminal device to activate/deactivate one or more CCs. The network device sends the first indication information to the terminal device, to indicate the terminal device to activate/deactivate a carrier, and indicate the maximum quantity N of MIMO layers that corresponds to each activated CC or BWP. For example, when the network device performs PDSCH scheduling by using the first carrier combination CC1 (N1_CC1=4) + CC2 (N1_CC2=4), the network device sends the first indication information to the terminal device, where the first indication information indicates the terminal device to deactivate the CC2, and the first indication information further indicates that a maximum quantity of MIMO layers that corresponds to the CC1 after the CC2 is deactivated is N2_CC1=8.

In another possible implementation, after the second component carrier CC of the terminal device is deactivated, the terminal device sends second indication information to the network device, where the second indication information indicates that the maximum quantity of downlink MIMO layers supported on the first component carrier CC is the second maximum quantity M2 of downlink MIMO layers; and after receiving the second indication information sent by the terminal device, the network device sends first indication information to the terminal device, where the first indication information indicates a second maximum quantity N2 of MIMO layers that corresponds to the first component carrier CC. The second maximum quantity N2 of MIMO layers is not greater than the second maximum quantity M2 of downlink MIMO layers, and the first CC and the second CC are in a first carrier combination.

For example, when the network device performs PDSCH scheduling by using the first carrier combination CC1 (N1_CC1=4) + CC2 (N1_CC2=4), the network device sends carrier deactivation indication information to the terminal device; and after the terminal device deactivates the CC2 based on the indication information sent by the network device, the terminal device may send the second indication information to the network device, to indicate that the maximum quantity M2_CC1 of downlink MIMO layers supported on the CC1 is 8. After receiving the second indication information, the network device may send the first indication information to the terminal device. The first indication information indicates that a maximum quantity of MIMO layers that corresponds to the CC1 is N2_CC1=8.

Optionally, the first indication information may be specifically a MAC CE message, a DCI message, or another physical (physical, PHY) layer message. The second indication information may be specifically a MAC CE message, a UCI message, or another physical (physical, PHY) layer message. It should be noted that, during specific implementation, the first indication information and/or the second indication information may be alternatively a new message, or may be carried in another message.

Before the second component carrier CC of the terminal device is deactivated, the terminal device receives a PDSCH on the first component carrier CC based on a fourth quantity of MIMO layers by using the first carrier combination, where the fourth quantity of MIMO layers is not greater than the first maximum quantity N1 of MIMO layers. After the second component carrier CC of the terminal device is deactivated, the terminal device receives a PDSCH on the first component carrier CC based on a third quantity of MIMO layers by using a second carrier combination, where the third quantity of MIMO layers is not greater than the second maximum quantity N2 of MIMO layers.

For example, before the CC2 of the terminal device is deactivated, the terminal device receives the PDSCH on the CC1 based on the fourth quantity of MIMO layers by using the first carrier combination CC1 (N1_CC1=4) + CC2 (N1_CC2=4), where the fourth quantity of MIMO layers is not greater than N1_CC1=4 corresponding to the CC1. After the CC2 of the terminal device is deactivated, the terminal device receives the PDSCH on the CC1 based on the third quantity of MIMO layers by using the second carrier combination CC1 (N2_CC1=8), where the third quantity of MIMO layers is not greater than N2_CC1=8 corresponding to the CC1.

Likewise, in the foregoing embodiment, after the second CC of the terminal device is deactivated, the network device skip sending an RRC-based PDSCH reconfiguration message, and the terminal device skip receiving an RRC-based PDSCH reconfiguration message, so that overheads caused by RRC-based reconfiguration can be avoided.

In the foregoing embodiment, the network device configures, based on a carrier granularity, maximum MIMO layer quantity information corresponding to each component carrier. Optionally, the network device may alternatively configure, based on a BWP granularity, maximum MIMO layer quantity information corresponding to each BWP. For a configuration method, refer to the foregoing descriptions.

It should be noted that the foregoing embodiment is described mainly by using an example in which the terminal device deactivates a carrier. When the network device indicates the terminal device to activate a carrier, for a switching manner of a maximum quantity of MIMO layers used by the network device and the terminal device, refer to the descriptions in the foregoing embodiment. Details are not described herein again.

In an existing carrier aggregation mechanism, after a network device activates or deactivates one or more CCs by using a MAC CE, the network device can perform scheduling only based on PDSCH parameters configured by using RRC, and a receive antenna port in a frequency band corresponding to a deactivated carrier cannot be fully utilized to increase a quantity of downlink transmission layers. In the foregoing implementations, PDSCH configuration and a terminal capability are enhanced, so that the network device can dynamically adjust, after activating or deactivating one or more carriers by using a MAC CE, a maximum quantity of MIMO layers on an activated CC without reconfiguring a PDSCH parameter by using RRC signaling. This can avoid a delay and overheads caused by RRC-based reconfiguration.

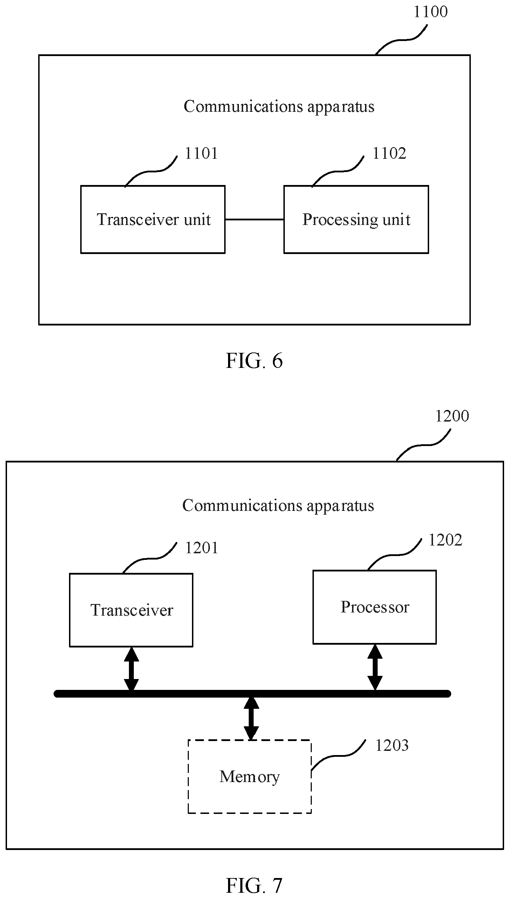

Based on the foregoing embodiments, an embodiment of this application further provides a communications apparatus. Referring to FIG. 6, the communications apparatus 1100 may include a transceiver unit 1101 and a processing unit 1102. The transceiver unit 1101 is configured to receive information (a message or data) or send information (a message or data) for the communications apparatus 1100, and the processing unit 1102 is configured to control and manage an action of the communications apparatus 1100. The processing unit 1102 may process a signal received by the transceiver unit 1101, and the processing unit 1102 may further control a step performed by the transceiver unit 1101.

For example, the communications apparatus 1100 may be specifically the terminal device in the foregoing embodiments, or a processor, a chip or chip system, a functional module, or the like in the terminal device; or the communications apparatus 1100 may be specifically the network device in the foregoing embodiments, or a processor, a chip or chip system, a functional module, or the like in the network device.

In an embodiment, when the communications apparatus 1100 is configured to implement a function of the terminal device in the foregoing embodiments, the following may be specifically included:

The transceiver unit 1101 sends first capability information to a network device, where the first capability information indicates that values of a maximum quantity of downlink MIMO layers supported by the terminal device on a first component carrier CC include a first maximum quantity M1 of downlink MIMO layers and a second maximum quantity M2 of downlink MIMO layers; and the transceiver unit 1101 receives first signaling sent by the network device, where the first signaling configures maximum MIMO layer quantity information corresponding to the first CC, and the maximum MIMO layer quantity information includes a first maximum quantity N1 of MIMO layers and a second maximum quantity N2 of MIMO layers. The first maximum quantity N1 of MIMO layers is not greater than the first maximum quantity M1 of downlink MIMO layers, and the second maximum quantity N2 of MIMO layers is not greater than the second maximum quantity M2 of downlink MIMO layers.

In an optional implementation, the first signaling is radio resource control RRC signaling, and the first maximum quantity M1 of downlink MIMO layers is different from the second maximum quantity M2 of downlink MIMO layers.

In an optional implementation, the first capability information further indicates a plurality of carrier combinations supported by the terminal device, the plurality of carrier combinations include a first carrier combination, and the first carrier combination includes the first CC and a second CC.

In an optional implementation, after the second CC of the terminal device is deactivated, the transceiver unit 1101 receives a physical downlink shared channel PDSCH on the first CC based on a third quantity of MIMO layers by using a second carrier combination, where the third quantity of MIMO layers is not greater than the second maximum quantity N2 of MIMO layers. The plurality of carrier combinations include the second carrier combination, and the second carrier combination does not include the second CC.

In an optional implementation, before the second CC of the terminal device is deactivated, the transceiver unit 1101 receives a PDSCH on the first CC based on a fourth quantity of MIMO layers by using the first carrier combination, where the fourth quantity of MIMO layers is not greater than the first maximum quantity N1 of MIMO layers.

In another optional implementation, the transceiver unit 1101 receives first indication information sent by the network device, where the first indication information indicates the second maximum quantity N2 of MIMO layers that corresponds to the first CC after the second CC is deactivated.

In still another optional implementation, after the second CC of the terminal device is deactivated, the transceiver unit 1101 sends second indication information to the network device, where the second indication information indicates that the maximum quantity of downlink MIMO layers supported on the first CC is the second maximum quantity M2 of downlink MIMO layers; and the transceiver unit 1101 receives first indication information sent by the network device, where the first indication information indicates the second maximum quantity N2 of MIMO layers that corresponds to the first CC.

In an example implementation, the second indication information is carried in downlink control information DCI.

In an example implementation, the first indication information is carried in a media access control layer element MAC CE or downlink control information DCI.

In an optional implementation, before the second CC of the terminal device is deactivated, the maximum quantity of downlink MIMO layers supported by the terminal device on the first CC is the first maximum quantity M1 of downlink MIMO layers; and after the second CC of the terminal device is deactivated, the maximum quantity of downlink MIMO layers supported by the terminal device on the first CC is the second maximum quantity M2 of downlink MIMO layers, where the second maximum quantity M2 of downlink MIMO layers is not less than the first maximum quantity M1 of downlink MIMO layers.

In an optional implementation, after the second CC of the terminal device is deactivated, the transceiver unit 1101 skip receiving a radio resource control RRC-based PDSCH reconfiguration message.

In an optional implementation, deactivating the second CC of the terminal device includes: the transceiver unit 1101 receives a MAC CE sent by the network device, where the MAC CE indicates the processing unit 1102 of the terminal device to deactivate the second CC.

In an optional implementation, the transceiver unit 1101 further sends second capability information, where the second capability information indicates that the terminal device supports dynamically switching the maximum quantity of downlink MIMO layers that corresponds to the first CC.

In another embodiment, when the communications apparatus 1100 is configured to implement a function of the network device in the foregoing embodiments, the following may be specifically included:

The transceiver unit 1101 receives first capability information reported by a terminal device, where the first capability information indicates that values of a maximum quantity of downlink MIMO layers supported by the terminal device on a first component carrier CC include a first maximum quantity M1 of downlink MIMO layers and a second maximum quantity M2 of downlink MIMO layers; and the transceiver unit 1101 sends first signaling to the terminal device, where the first signaling configures a maximum MIMO layer quantity list corresponding to the first CC, and the maximum MIMO layer quantity list includes a first maximum quantity N1 of MIMO layers and a second maximum quantity N2 of MIMO layers. The first maximum quantity N1 of MIMO layers is not greater than the first maximum quantity M1 of downlink MIMO layers, and the second maximum quantity N2 of MIMO layers is not greater than the second maximum quantity M2 of downlink MIMO layers.

In an optional implementation, the first signaling is radio resource control RRC signaling, and the first maximum quantity M1 of downlink MIMO layers is different from the second maximum quantity M2 of downlink MIMO layers.

In an optional implementation, the first capability information further indicates a plurality of carrier combinations supported by the terminal device, the plurality of carrier combinations include a first carrier combination, and the first carrier combination includes the first CC and a second CC.

In an optional implementation, the transceiver unit 1101 sends deactivation indication information to the terminal device, so that the second CC of the terminal device is deactivated, and then the transceiver unit 1101 sends a physical downlink shared channel PDSCH on the first CC based on a third quantity of MIMO layers by using a second carrier combination, where the third quantity of MIMO layers is not greater than the second maximum quantity N2 of MIMO layers. The plurality of carrier combinations include the second carrier combination, and the second carrier combination does not include the second CC.

In an optional implementation, before the second CC of the terminal device is deactivated, the transceiver unit 1101 sends a PDSCH on the first CC based on a fourth quantity of MIMO layers by using the first carrier combination, where the fourth quantity of MIMO layers is not greater than the first maximum quantity N1 of MIMO layers.

In another optional implementation, the transceiver unit 1101 sends first indication information to the terminal device, where the first indication information indicates the second maximum quantity N2 of MIMO layers that corresponds to the first CC after the second CC is deactivated.

In still another optional implementation, after the transceiver unit 1101 sends the deactivation indication information to the terminal device, so that the terminal device deactivates the second CC, the transceiver unit 1101 receives second indication information sent by the terminal device, where the second indication information indicates that the maximum quantity of downlink MIMO layers supported by the terminal device on the first CC is the second maximum quantity M2 of downlink MIMO layers; and the transceiver unit 1101 sends first indication information to the terminal device, where the first indication information indicates the second maximum quantity N2 of MIMO layers that corresponds to the first CC.

In an example implementation, the second indication information is carried in uplink control information UCI.

In an example implementation, the first indication information is carried in a media access control layer element MAC CE or downlink control information DCI.

In an optional implementation, before the second CC of the terminal device is deactivated, the maximum quantity of downlink MIMO layers supported by the terminal device on the first CC is the first maximum quantity M1 of downlink MIMO layers; and after the transceiver unit 1101 sends the deactivation indication information to the terminal device, so that the terminal device deactivates the second CC, the maximum quantity of downlink MIMO layers supported by the terminal device on the first CC is the second maximum quantity M2 of downlink MIMO layers, where the second maximum quantity M2 of downlink MIMO layers is not less than the first maximum quantity M1 of downlink MIMO layers.

In an optional implementation, after the transceiver unit 1101 sends the deactivation indication information to the terminal device, so that the terminal device deactivates the second CC, the transceiver unit 1101 skip sending a radio resource control RRC-based PDSCH reconfiguration message.

In an optional implementation, the sending, by the transceiver unit 1101, deactivation indication information to the terminal device, so that the terminal device deactivates the second CC includes: the transceiver unit 1101 sends a MAC CE to the terminal device, where the MAC CE indicates the terminal device to deactivate the second CC.

In an optional implementation, the transceiver unit 1101 further receives second capability information reported by the terminal device, where the second capability information indicates that the terminal device supports dynamically switching the maximum quantity of downlink MIMO layers that corresponds to the first CC.

It should be noted that division into the units in embodiments of this application is an example, and is merely a logical function division. There may be another division manner during actual implementation. Functional units in embodiments of this application may be integrated into one processing unit, or each unit may exist alone physically, or two or more units may be integrated into one unit. The integrated unit may be implemented in a form of hardware, or may be implemented in a form of a software function unit.

If the integrated unit is implemented in the form of a software function unit and is sold or used as an independent product, the integrated unit may be stored in a computer-readable storage medium. Based on such an understanding, the technical solutions in this application essentially, or the part contributing to a conventional technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the method in embodiments of this application. The foregoing storage medium includes any medium that can store program code, such as a USB flash drive, a removable hard disk, a read-only memory, a random access memory, a magnetic disk, or an optical disc.

Based on the foregoing embodiments, an embodiment of this application further provides a communications apparatus. Referring to FIG. 7, the communications apparatus 1200 may include a transceiver 1201 and a processor 1202. Optionally, the communications apparatus 1200 may further include a memory 1203. The memory 1203 may be disposed inside the communications apparatus 1200, or may be disposed outside the communications apparatus 1200. The processor 1202 may control the transceiver 1201 to receive and send data or the like.

Specifically, the processor 1202 may be a central processing unit (central processing unit, CPU), a network processor (network processor, NP), or a combination of a CPU and an NP. The processor 1202 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The transceiver 1201, the processor 1202, and the memory 1203 are connected to each other. Optionally, the transceiver 1201, the processor 1202, and the memory 1203 are connected to each other by using a bus 1704. The bus 1704 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, in FIG. 7, only one bold line is used to represent the bus. However, this does not indicate that there is only one bus or one type of bus.

In an optional implementation, the memory 1203 is configured to store a program or the like. Specifically, the program may include program code, and the program code includes computer operation instructions. The memory 1203 may include a RAM, and may further include a non-volatile memory (non-volatile memory), for example, one or more magnetic disk memories. The processor 1202 executes the application program stored in the memory 1203, to implement the foregoing function, thereby implementing a function of the communications apparatus 1200.

For example, the communications apparatus 1200 may be the terminal device in the foregoing embodiments, or may be the network device in the foregoing embodiments.

In an embodiment, when the communications apparatus 1200 implements a function of the terminal device in embodiments of this application, the transceiver 1201 may implement receiving and sending operations performed by the terminal device in embodiments of this application, and the processor 1202 may implement an operation, other than the receiving and sending operations, performed by the terminal device in embodiments of this application. For specific related descriptions, refer to related descriptions in embodiments of this application. Details are not described herein again.

In another embodiment, when the communications apparatus 1200 implements a function of the network device in embodiments of this application, the transceiver 1201 may implement receiving and sending operations performed by the network device in embodiments of this application, and the processor 1202 may implement an operation, other than the receiving and sending operations, performed by the network device in embodiments of this application. For specific related descriptions, refer to related descriptions in embodiments of this application. Details are not described herein again.

Based on the foregoing embodiments, an embodiment of this application provides a communications system. The communications system may include the terminal device, the network device, and the like in the foregoing embodiments.

An embodiment of this application further provides a computer-readable storage medium. The computer-readable storage medium is configured to store a computer program. When the computer program is executed by a computer, the computer can implement the downlink scheduling method provided in the foregoing method embodiments.

An embodiment of this application further provides a computer program product. The computer program product is configured to store a computer program. When the computer program is executed by a computer, the computer can implement the downlink scheduling method provided in the foregoing method embodiments.

An embodiment of this application further provides a chip, including a processor. The processor is coupled to a memory, and is configured to invoke a program in the memory, so that the chip implements the downlink scheduling method provided in the foregoing method embodiments.

An embodiment of this application further provides a chip. The chip is coupled to a memory, and the chip is configured to implement the downlink scheduling method provided in the foregoing method embodiments.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to embodiments of this application. It should be understood that each procedure and/or block in the flowcharts and/or block diagrams, and combinations of procedures and/or blocks in the flowcharts and/or block diagrams may be implemented by using computer program instructions. These computer program instructions may be provided to a general-purpose computer, a special-purpose computer, an embedded processor, or a processor of another programmable data processing device to generate a machine, so that the instructions executed by the computer or the processor of another programmable data processing device generate an apparatus for implementing a specified function in one or more procedures in the flowchart and/or one or more blocks in the block diagram.

Alternatively, these computer program instructions may be stored in a computer-readable memory that can instruct a computer or another programmable data processing device to work in a specific manner, so that the instructions stored in the computer-readable memory generate an artifact including an instruction apparatus. The instruction apparatus implements a specified function in one or more procedures in the flowchart and/or one or more blocks in the block diagram.

Alternatively, these computer program instructions may be loaded to a computer or another programmable data processing device, so that a series of operation steps are performed on the computer or the another programmable device, to generate computer-implemented processing, so that the instructions executed on the computer or the another programmable device provide a step for implementing a specified function in one or more procedures in the flowchart and/or one or more blocks in the block diagram.

It is clear that a person skilled in the art can make various modifications and variations to embodiments of this application without departing from the scope of embodiments of this application. Therefore, this application is intended to cover these modifications and variations of embodiments of this application provided that these modifications and variations fall within the scope of the claims of this application and equivalent technologies thereof.

## Claims

1. A downlink scheduling method, comprising:
reporting, by a terminal device, first capability information to a network device, wherein the first capability information indicates that values of a maximum quantity of downlink MIMO layers supported by the terminal device on a first component carrier CC comprise a first maximum quantity M1 of downlink MIMO layers and a second maximum quantity M2 of downlink MIMO layers; and
receiving, by the terminal device, first signaling sent by the network device, wherein the first signaling configures maximum MIMO layer quantity information corresponding to the first CC, and the maximum MIMO layer quantity information comprises a first maximum quantity N1 of MIMO layers and a second maximum quantity N2 of MIMO layers, wherein
the first maximum quantity N1 of MIMO layers is not greater than the first maximum quantity M1 of downlink MIMO layers, and the second maximum quantity N2 of MIMO layers is not greater than the second maximum quantity M2 of downlink MIMO layers.

2. The method according to claim 1, wherein the first signaling is radio resource control RRC signaling, and the first maximum quantity M1 of downlink MIMO layers is different from the second maximum quantity M2 of downlink MIMO layers.

3. The method according to claim 2, wherein the method further comprises: the first capability information indicates a plurality of carrier combinations supported by the terminal device, the plurality of carrier combinations comprise a first carrier combination, and the first carrier combination comprises the first CC and a second CC.

4. The method according to claim 3, wherein the method further comprises: after the second CC of the terminal device is deactivated, receiving, by the terminal device, a physical downlink shared channel PDSCH on the first CC based on a third quantity of MIMO layers by using a second carrier combination, wherein the third quantity of MIMO layers is not greater than the second maximum quantity N2 of MIMO layers; and
the plurality of carrier combinations comprise the second carrier combination, and the second carrier combination does not comprise the second CC.

5. The method according to claim 3 or 4, wherein the method further comprises: before the second CC of the terminal device is deactivated, receiving, by the terminal device, a PDSCH on the first CC based on a fourth quantity of MIMO layers by using the first carrier combination, wherein the fourth quantity of MIMO layers is not greater than the first maximum quantity N1 of MIMO layers.

6. The method according to claim 5, wherein the method further comprises: receiving, by the terminal device, first indication information sent by the network device, wherein the first indication information indicates the second maximum quantity N2 of MIMO layers that corresponds to the first CC after the second CC is deactivated.

7. The method according to claim 5, wherein the method further comprises: after the second CC of the terminal device is deactivated, sending, by the terminal device, second indication information to the network device, wherein the second indication information indicates that the maximum quantity of downlink MIMO layers supported by the terminal device on the first CC is the second maximum quantity M2 of downlink MIMO layers; and
receiving, by the terminal device, first indication information sent by the network device, wherein the first indication information indicates the second maximum quantity N2 of MIMO layers that corresponds to the first CC.

8. The method according to claim 7, wherein the second indication information is carried in uplink control information UCI.

9. The method according to any one of claims 6 to 8, wherein the first indication information is carried in a Media Access Control control element MAC CE or downlink control information DCI.

10. The method according to any one of claims 3 to 9, wherein the method further comprises: before the second CC of the terminal device is deactivated, the maximum quantity of downlink MIMO layers supported by the terminal device on the first CC is the first maximum quantity M1 of downlink MIMO layers; and
after the second CC of the terminal device is deactivated, the maximum quantity of downlink MIMO layers supported by the terminal device on the first CC is the second maximum quantity M2 of downlink MIMO layers, wherein the second maximum quantity M2 of downlink MIMO layers is not less than the first maximum quantity M1 of downlink MIMO layers.

11. The method according to any one of claims 3 to 10, wherein the method further comprises: after the second CC of the terminal device is deactivated, skipping receiving, by the terminal device, a radio resource control RRC-based PDSCH reconfiguration message.

12. The method according to any one of claims 3 to 11, wherein deactivating the second CC of the terminal device comprises: receiving, by the terminal device, a MAC CE sent by the network device, wherein the MAC CE indicates to deactivate the second CC of the terminal device.

13. The method according to any one of claims 1 to 12, wherein the method further comprises: reporting, by the terminal device, second capability information, wherein the second capability information indicates that the terminal device supports dynamically switching the maximum quantity of downlink MIMO layers that corresponds to the first CC.

14. A downlink scheduling method, comprising:
reporting, by a terminal device, first capability information to a network device, wherein the first capability information indicates that values of a maximum quantity of downlink MIMO layers supported by the terminal device on a first component carrier CC comprise a first maximum quantity M1 of downlink MIMO layers and a second maximum quantity M2 of downlink MIMO layers;
receiving, by the terminal device, radio resource control RRC signaling sent by the network device, wherein the RRC signaling configures a first maximum quantity N1 of MIMO layers that corresponds to the first CC, and the first maximum quantity N1 of MIMO layers is not greater than the first maximum quantity M1 of downlink MIMO layers; and
receiving, by the terminal device, first indication information sent by the network device, wherein the first indication information indicates a second maximum quantity N2 of MIMO layers that corresponds to the first CC after a second CC is deactivated, and the second maximum quantity N2 of MIMO layers is not greater than the second maximum quantity M2 of downlink MIMO layers, wherein
the first CC and the second CC are in a first carrier combination.

15. A downlink scheduling method, comprising:
reporting, by a terminal device, first capability information to a network device, wherein the first capability information indicates that values of a maximum quantity of downlink MIMO layers supported by the terminal device on a first component carrier CC comprise a first maximum quantity M1 of downlink MIMO layers and a second maximum quantity M2 of downlink MIMO layers;
receiving, by the terminal device, radio resource control RRC signaling sent by the network device, wherein the RRC signaling configures a first maximum quantity N1 of MIMO layers that corresponds to the first CC, and the first maximum quantity N1 of MIMO layers is not greater than the first maximum quantity M1 of downlink MIMO layers;
after a second CC of the terminal device is deactivated, sending, by the terminal device, second indication information to the network device, wherein the second indication information indicates that the maximum quantity of downlink MIMO layers supported by the terminal device on the first CC is the second maximum quantity M2 of downlink MIMO layers; and
receiving, by the terminal device, first indication information sent by the network device, wherein the first indication information indicates a second maximum quantity N2 of MIMO layers that corresponds to the first CC, and the second maximum quantity N2 of MIMO layers is not greater than the second maximum quantity M2 of downlink MIMO layers, wherein
the first CC and the second CC are in a first carrier combination.

16. A downlink scheduling method, comprising:
receiving, by a network device, first capability information reported by a terminal device, wherein the first capability information indicates that values of a maximum quantity of downlink MIMO layers supported by the terminal device on a first component carrier CC comprise a first maximum quantity M1 of downlink MIMO layers and a second maximum quantity M2 of downlink MIMO layers; and
sending, by the network device, first signaling to the terminal device, wherein the first signaling configures a maximum MIMO layer quantity list corresponding to the first CC, and the maximum MIMO layer quantity list comprises a first maximum quantity N1 of MIMO layers and a second maximum quantity N2 of MIMO layers, wherein
the first maximum quantity N1 of MIMO layers is not greater than the first maximum quantity M1 of downlink MIMO layers, and the second maximum quantity N2 of MIMO layers is not greater than the second maximum quantity M2 of downlink MIMO layers.

17. The method according to claim 16, wherein the first signaling is radio resource control RRC signaling, and the first maximum quantity M1 of downlink MIMO layers is different from the second maximum quantity M2 of downlink MIMO layers.

18. The method according to claim 17, wherein the method further comprises: the first capability information further indicates a plurality of carrier combinations supported by the terminal device, the plurality of carrier combinations comprise a first carrier combination, and the first carrier combination comprises the first CC and a second CC.

19. The method according to claim 18, wherein the method further comprises: sending, by the network device, deactivation indication information to the terminal device, so that the second CC of the terminal device is deactivated, and then sending, by the network device, a physical downlink shared channel PDSCH on the first CC based on a third quantity of MIMO layers by using a second carrier combination, wherein the third quantity of MIMO layers is not greater than the second maximum quantity N2 of MIMO layers; and
the plurality of carrier combinations comprise the second carrier combination, and the second carrier combination does not comprise the second CC.

20. The method according to claim 18 or 19, wherein the method further comprises: before the second CC of the terminal device is deactivated, sending, by the network device, a PDSCH on the first CC based on a fourth quantity of MIMO layers by using the first carrier combination, wherein the fourth quantity of MIMO layers is not greater than the first maximum quantity N1 of MIMO layers.

21. The method according to claim 20, wherein the method further comprises: sending, by the network device, first indication information to the terminal device, wherein the first indication information indicates the second maximum quantity N2 of MIMO layers that corresponds to the first CC after the second CC is deactivated.

22. The method according to claim 20, wherein the method further comprises: after the network device sends the deactivation indication information to the terminal device, so that the terminal device deactivates the second CC, receiving, by the network device, second indication information sent by the terminal device, wherein the second indication information indicates that the maximum quantity of downlink MIMO layers supported by the terminal device on the first CC is the second maximum quantity M2 of downlink MIMO layers; and
sending, by the network device, first indication information to the terminal device, wherein the first indication information indicates the second maximum quantity N2 of MIMO layers that corresponds to the first CC.

23. The method according to claim 22, wherein the second indication information is carried in uplink control information UCI.

24. The method according to any one of claims 21 to 23, wherein the first indication information is carried in a media access control layer element MAC CE or downlink control information DCI.

25. The method according to any one of claims 18 to 24, wherein the method further comprises: before the second CC of the terminal device is deactivated, the maximum quantity of downlink MIMO layers supported by the terminal device on the first CC is the first maximum quantity M1 of downlink MIMO layers; and
after the network device sends the deactivation indication information to the terminal device, so that the terminal device deactivates the second CC, the maximum quantity of downlink MIMO layers supported by the terminal device on the first CC is the second maximum quantity M2 of downlink MIMO layers, wherein the second maximum quantity M2 of downlink MIMO layers is not less than the first maximum quantity M1 of downlink MIMO layers.

26. The method according to any one of claims 18 to 25, wherein the method further comprises: after the network device sends the deactivation indication information to the terminal device, so that the terminal device deactivates the second CC, skipping sending, by the network device, a radio resource control RRC-based PDSCH reconfiguration message.

27. The method according to any one of claims 18 to 26, wherein the sending, by the network device, deactivation indication information to the terminal device, so that the terminal device deactivates the second CC comprises: sending, by the network device, a MAC CE to the terminal device, wherein the MAC CE indicates the terminal device to deactivate the second CC.

28. The method according to any one of claims 16 to 27, wherein the method further comprises: further receiving, by the network device, second capability information reported by the terminal device, wherein the second capability information indicates that the terminal device supports dynamically switching the maximum quantity of downlink MIMO layers that corresponds to the first CC.

29. A downlink scheduling method, comprising:
receiving, by a network device, first capability information reported by a terminal device, wherein the first capability information indicates that values of a maximum quantity of downlink MIMO layers supported by the terminal device on a first component carrier CC comprise a first maximum quantity M1 of downlink MIMO layers and a second maximum quantity M2 of downlink MIMO layers;
sending, by the network device, radio resource control RRC signaling to the terminal device, wherein the RRC signaling configures a first maximum quantity N1 of MIMO layers that corresponds to the first CC, and the first maximum quantity N1 of MIMO layers is not greater than the first maximum quantity M1 of downlink MIMO layers; and
sending, by the network device, first indication information to the terminal device, wherein the first indication information indicates a second maximum quantity N2 of MIMO layers that corresponds to the first CC after a second CC is deactivated, and the second maximum quantity N2 of MIMO layers is not greater than the second maximum quantity M2 of downlink MIMO layers, wherein
the first CC and the second CC are in a first carrier combination.

30. A downlink scheduling method, comprising:
receiving, by a network device, first capability information reported by a terminal device, wherein the first capability information indicates that values of a maximum quantity of downlink MIMO layers supported by the terminal device on a first component carrier CC comprise a first maximum quantity M1 of downlink MIMO layers and a second maximum quantity M2 of downlink MIMO layers;
sending, by the network device, radio resource control RRC signaling to the terminal device, wherein the RRC signaling configures a first maximum quantity N1 of MIMO layers that corresponds to the first CC, and the first maximum quantity N1 of MIMO layers is not greater than the first maximum quantity M1 of downlink MIMO layers;
sending, by the network device, deactivation indication information to the terminal device, so that the terminal device deactivates a second CC, and then receiving, by the network device, second indication information sent by the terminal device, wherein the second indication information indicates that the maximum quantity of downlink MIMO layers supported by the terminal device on the first CC is the second maximum quantity M2 of downlink MIMO layers, and the first CC and the second CC are in a first carrier combination; and
sending, by the network device, first indication information to the terminal device, wherein the first indication information indicates a second maximum quantity N2 of MIMO layers that corresponds to the first CC, and the second maximum quantity N2 of MIMO layers is not greater than the second maximum quantity M2 of downlink MIMO layers.

31. A terminal device, comprising one or more processors and one or more memories, wherein the one or more memories are coupled to the one or more processors, the one or more memories are configured to store computer program code, the computer program code comprises computer instructions, and when the one or more processors execute the computer instructions, the terminal device is enabled to perform the method according to any one of claims 1 to 15.

32. A network device, comprising one or more processors and one or more memories, wherein the one or more memories are coupled to the one or more processors, the one or more memories are configured to store computer program code, the computer program code comprises computer instructions, and when the one or more processors execute the computer instructions, the network device is enabled to perform the method according to any one of claims 16 to 30.

33. A computer-readable storage medium, wherein the computer-readable storage medium stores computer-executable instructions; and when invoked by a computer, the computer-executable instructions are used to enable the computer to perform the method according to any one of claims 1 to 15 or perform the method according to any one of claims 16 to 30.

34. A computer program product comprising instructions, wherein when the computer program product is run on a computer, the computer is enabled to perform the method according to any one of claims 1 to 15 or perform the method according to any one of claims 16 to 30.

35. A chip, wherein the chip is coupled to a memory, and is configured to read and execute program instructions stored in the memory, to implement the method according to any one of claims 1 to 15 or implement the method according to any one of claims 16 to 30.
